(19)

Europäisches Patentamt
European Patent Office
Office européen des brevets

(11) **EP 4 231 760 A1**

(12) **EUROPEAN PATENT APPLICATION**
published in accordance with Art. 153(4) EPC

(43) Date of publication:
**23.08.2023  Bulletin 2023/34**

(21) Application number: **21880375.7**

(22) Date of filing: **05.10.2021**

(51) International Patent Classification (IPC):
*H04W 74/08* (2009.01)     *H04W 74/00* (2009.01)
*H04W 72/12* (2023.01)     *H04W 72/04* (2023.01)
*H04W 16/28* (2009.01)     *H04W 16/14* (2009.01)

(52) Cooperative Patent Classification (CPC):
H04W 16/14; H04W 16/28; H04W 72/04;
H04W 72/12; H04W 74/00; H04W 74/08

(86) International application number:
**PCT/KR2021/013585**

(87) International publication number:
**WO 2022/080728 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020  KR 20200133436**

(71) Applicant: **LG ELECTRONICS, INC.**
**Seoul 07336 (KR)**

(72) Inventors:
• **MYUNG, Sechang**
  **Seoul 06772 (KR)**
• **KIM, Seonwook**
  **Seoul 06772 (KR)**
• **YANG, Suckchel**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR PERFORMING CHANNEL ACCESS PROCEDURE, AND DEVICE THEREFOR**

(57)     The present disclosure discloses a method by which a terminal transmits an uplink signal in a wireless communication system. Particularly, the method comprises: receiving downlink control information (DCI) for scheduling the uplink signal; performing listen-before-talk (LBT); and transmitting, as a result of the LBT being successful, the uplink signal on the basis of the DCI, wherein the direction of the LBT and/or the type of the LBT can be based on spatial relation information for the uplink signal and/or the association between the DCI and the uplink signal.

FIG. 30

EP 4 231 760 A1

**Description**

[Technical Field]

The present disclosure relates to a method of performing a channel access procedure and a device therefor, and more particularly to a method and device for performing a channel access procedure by configuring a direction for performing the channel access procedure and a type of the channel access procedure.

[Background Art]

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

[Disclosure]

[Technical Problem]

An object of the present disclosure is to provide a method of performing a channel access procedure and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

[Technical Solution]

According to an embodiment of the present disclosure, a method of transmitting an uplink signal by a user equipment (UE) in a wireless communication system includes receiving downlink control information (DCI) for scheduling the uplink signal, performing Listen-before-Talk (LBT), and based on success of the LBT, transmitting the uplink signal based on the DCI, wherein at least one of a direction of the LBT or a type of the LBT is based on at least one of Spatial Relation Information for the uplink signal or an association relationship between the DCI and the uplink signal

In this case, the direction of the LBT may be determined based on a reference signal of the Spatial Relation Information.

The direction of the LBT may be determined based on whether a Synchronization Signal Block (SSB) is transmitted within a Channel Occupancy Time (COT) acquired by a base station (BS).

Based on that the DCI and the uplink signal are related, the LBT may be performed without a Random Back-off Counter, and based on that the DCI and the uplink signal are not related, the LBT may be performed based on the Random Back-off Counter.

The direction of the LBT and the type of the LBT may be based on an LBT direction and LBT type used in transmission of the DCI.

According to the present disclosure, a user equipment (UE) for transmitting an uplink signal in a wireless communication system includes at least one transceiver, at least one processor, and at least one memory operatively connected to the at least one processor and configured to store instructions that when executed causes the at least one processor to perform an operation including receiving downlink control information (DCI) for scheduling the uplink signal through the at least one transceiver, performing Listen-before-Talk (LBT), and based on success of the LBT, transmitting the uplink signal based on the DCI through the at least one transceiver, wherein at least one of a direction of the LBT or a type of the LBT is based on at least one of Spatial Relation Information for the uplink signal or an association relationship between the DCI and the uplink signal.

In this case, the direction of the LBT may be determined based on a reference signal of the Spatial Relation Information.

The direction of the LBT may be determined based on whether a Synchronization Signal Block (SSB) is transmitted within a Channel Occupancy Time (COT) acquired by a base station (BS).

Based on that the DCI and the uplink signal are related, the LBT may be performed without a Random Back-off Counter, and based on that the DCI and the uplink signal are not related, the LBT may be performed based on the Random Back-off Counter.

The direction of the LBT and the type of the LBT may be based on an LBT direction and LBT type used in transmission of the DCI.

According to the present disclosure, a device for transmitting an uplink signal in a wireless communication system includes at least one processor, and at least one memory operatively connected to the at least one processor and configured to store instructions that when executed causes the at least one processor to perform an operation including receiving downlink control information (DCI) for scheduling the uplink signal, performing Listen-before-Talk (LBT); based on success of the LBT, transmitting the uplink signal based on the DCI, wherein at least one of a direction of the LBT or a type of the LBT is based on at least one of Spatial Relation Information for the uplink signal or an association relationship between the DCI and the uplink signal.

According to the present disclosure, a computer-readable storage medium including at least one computer program that causes at least one processor to perform an operation is provided. The operation includes receiving downlink control information (DCI) for scheduling the uplink signal, performing Listen-before-Talk (LBT), and based on success of the LBT, transmitting the uplink signal based on the DCI, wherein at least one of a direction of the LBT or a type of the LBT is based on at least one of Spatial Relation Information for the uplink signal or an association relationship between the DCI and the uplink signal.

According to the present disclosure, a method of receiving an uplink signal by a base station (BS) in a wireless communication system includes transmitting downlink control information (DCI) for scheduling the uplink signal, and receiving the uplink signal based on the DCI through at least one direction of a plurality of directions, wherein the at least one direction is based on at least one of Spatial Relation Information for the uplink signal or an association relationship between the DCI and the uplink signal.

According to the present disclosure, a base station (BS) for receiving an uplink signal in a wireless communication system includes at least one transceiver, at least one processor, and at least one memory operatively connected to the at least one processor and configured to store instructions that when executed causes the at least one processor to perform an operation including transmitting downlink control information (DCI) for scheduling the uplink signal through the at least one transceiver, and receiving the uplink signal based on the DCI through at least one direction of a plurality of directions through the at least one transceiver, wherein the at least one direction is based on at least one of Spatial Relation Information for the uplink signal or an association relationship between the DCI and the uplink signal.

[Advantageous Effects]

According to the present disclosure, when a base station (BS) or a user equipment (UE) performs an LBT in an unlicensed band, whether to perform the LBT omnidirectional or a specific beam direction may be configured/indicated. Whether to perform a random back-off-based LBT (e.g., Cat-3 or Cat-4) or Cat-2 LBT but not Random Back-off may be configured/indicated.

In addition, COT initiating may be indicated/configured rather than performing the LBT, and a direction and type of the LBT required for a COT sharing operation may be configured/indicated.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

[Description of Drawings]

FIG. 1 illustrates physical channels and a general signal transmission method using the physical channels in a 3rd generation partnership project (3GPP) system as an exemplary wireless communication system;

FIGS. 2, 3 and 4 are diagrams illustrating structures of a radio frame and slots used in a new RAT (NR) system;

FIGS. 5 and 6 are diagrams illustrating the composition of a synchronization signal/physical broadcast channel (SS/PBCH) block and a method of transmitting an SS/PBCH block;

FIG. 7 is a diagram illustrating an exemplary 4-step RACH procedure;

FIG. 8 is a diagram illustrating an exemplary 2-step RACH procedure;

FIG. 9 is a diagram illustrating an exemplary contention-free RACH procedure;

FIGS. 10 and 11 are diagrams illustrating transmission of synchronization signal blocks (SSBs) and physical random access channel (PRACH) resources linked to the SSBs;

FIG. 12 illustrates exemplary uplink (UL) transmission operations of a user equipment (UE);

FIG. 13 illustrates exemplary repeated transmissions based on a configured grant;

FIG. 14 illustrates a wireless communication system supporting an unlicensed band;

FIG. 15 illustrates an exemplary method of occupying resources in an unlicensed band;

FIG. 16 illustrates an exemplary channel access procedure of a UE for UL signal transmission and/or DL signal transmission in an unlicensed band applicable to the present disclosure;

FIG. 17 is a diagram for explaining a plurality of listen-before-talk subbands (LBT-SBs) applicable to the present disclosure;

FIG. 18 is a diagram for explaining a resource block (RB) interlace applicable to the present disclosure;

FIG. 19 is a diagram for explaining a resource allocation method for UL transmission in a shared spectrum applicable to the present disclosure;

FIG. 20 is a diagram illustrating analog beamforming in the NR system;

FIGS. 21, 22, 23, 24 and 25 are diagrams illustrating beam management in the NR system;

FIGS. 26 and 27 are diagrams for explaining a sounding reference signal (SRS) applicable to the present disclosure;

FIG. 28 is a diagram for explaining beam-based LBT and beam group-based LBT according to an embodiment of the present disclosure;

FIG. 29 is a diagram for explaining a method for performing a channel access procedure in an unlicensed band by a Frame Based Equipment (FBE).

FIGS. 30 and 31 are diagrams for explaining overall operation processes of a UE and a BS according to an embodiment of the present disclosure;

FIG. 32 illustrates an exemplary communication system applied to the present disclosure;

FIG. 33 illustrates an exemplary wireless device applicable to the present disclosure; and

FIG. 34 illustrates an exemplary vehicle or autonomous driving vehicle applicable to the present disclosure.

[Best Mode]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3$^{rd}$ generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

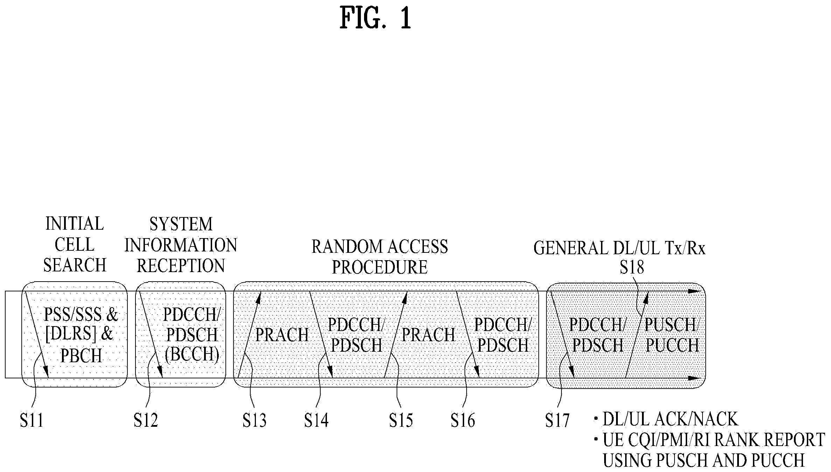

FIG. 1 illustrates physical channels and a general signal transmission method using the physical channels in a 3GPP system.

When a UE is powered on or enters a new cell, the UE performs initial cell search (S11). The initial cell search involves acquisition of synchronization to a BS. For this purpose, the UE receives a synchronization signal block (SSB) from the BS. The SSB includes a primary synchronization signal (PSS), a secondary synchronization signal (SSS), and a physical broadcast channel (PBCH). The UE synchronizes its timing to the BS and acquires information such as a cell identifier (ID) based on the PSS/SSS. Further, the UE may acquire information broadcast in the cell by receiving the PBCH from the BS. During the initial cell search, the UE may also monitor a DL channel state by receiving a downlink reference signal (DL RS).

After the initial cell search, the UE may acquire more detailed system information by receiving a physical downlink control channel (PDCCH) and a physical downlink shared channel (PDSCH) corresponding to the PDCCH (S12).

Subsequently, to complete connection to the BS, the UE may perform a random access procedure with the BS (S13 to S16). Specifically, the UE may transmit a preamble on a physical random access channel (PRACH) (S13) and may receive a PDCCH and a random access response (RAR) for the preamble on a PDSCH corresponding to the PDCCH (S14). The UE may then transmit a physical uplink shared channel (PUSCH) by using scheduling information in the RAR (S15), and perform a contention resolution procedure including reception of a PDCCH and a PDSCH signal corresponding to the PDCCH (S 16).

When the random access procedure is performed in two steps, steps S13 and S15 may be performed as one step (in which Message A is transmitted by the UE), and steps S14 and S16 may be performed as one step (in which Message B is transmitted by the BS).

After the above procedure, the UE may receive a PDCCH and/or a PDSCH from the BS (S17) and transmit a physical uplink shared channel (PUSCH) and/or a physical uplink control channel (PUCCH) to the BS (S18), in a general UL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), channel state information (CSI), and so on. The CSI includes a channel quality indicator (CQI), a precoding matrix index (PMI), a rank indication (RI), and so on. In general, UCI is transmitted on a PUCCH. However, if control information and data should be transmitted simultaneously, the control information and the data may be transmitted on a PUSCH. In addition, the UE may transmit the UCI aperiodically on the PUSCH, upon receipt of a request/command from a network.

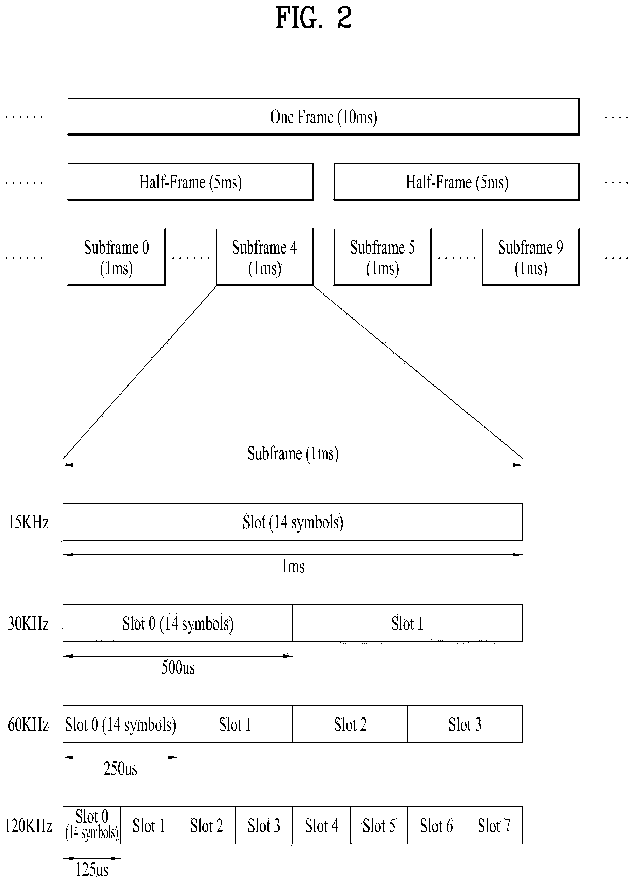

FIG. 2 illustrates a radio frame structure.

In NR, UL and DL transmissions are configured in frames. Each radio frame has a length of 10 ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS $(15*2^u)$ | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS $(15*2^u)$ | $N^{slot}_{symb}$ | $N^{frame,u}_{slot}$ | $N^{subframe,u}_{slot}$ |
|---|---|---|---|
| 60KHz (u=2) | 12 | 40 | 4 |

The frame structure is merely an example, and the number of subframes, the number of slots, and the number of symbols in a frame may be changed in various manners. In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

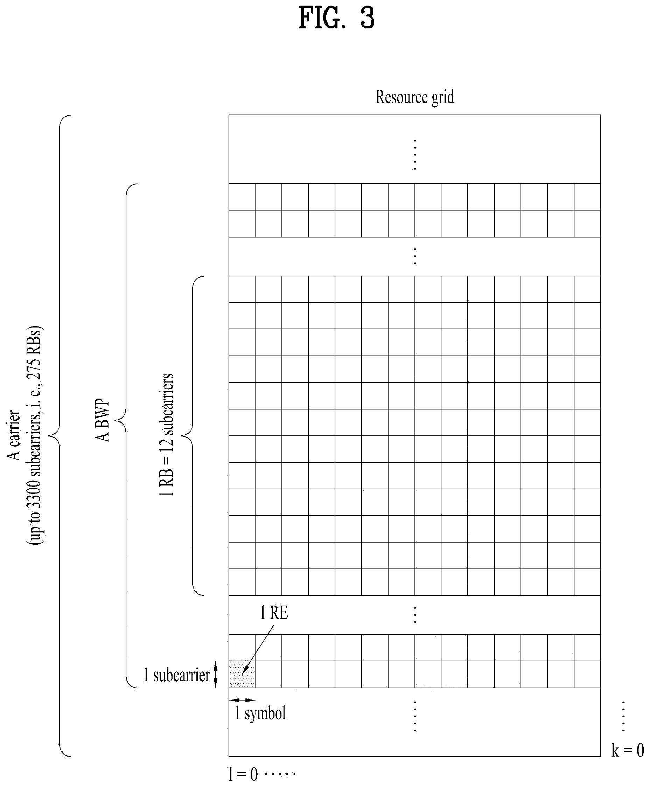

FIG. 3 illustrates a resource grid during the duration of one slot. A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

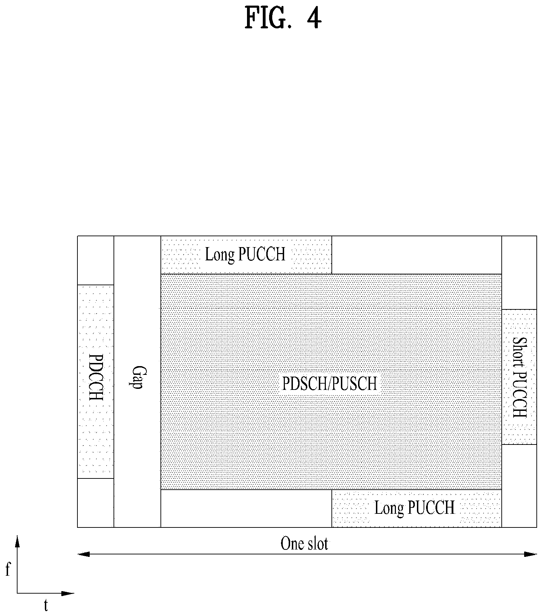

FIG. 4 illustrates exemplary mapping of physical channels in a slot.

ADL control channel, DL or UL data, and a UL control channel may all be included in one slot. For example, the first N symbols (hereinafter, referred to as a DL control region) in a slot may be used to transmit a DL control channel, and the last M symbols (hereinafter, referred to as a UL control region) in the slot may be used to transmit a UL control channel. N and M are integers equal to or greater than 0. A resource region (hereinafter, referred to as a data region) between the DL control region and the UL control region may be used for DL data transmission or UL data transmission. A time gap for DL-to-UL or UL-to-DL switching may be defined between a control region and the data region. A PDCCH may be transmitted in the DL control region, and a PDSCH may be transmitted in the DL data region. Some symbols at the time of switching from DL to UL in a slot may be configured as the time gap.

Now, a detailed description will be given of physical channels.

DL Channel Structures

An eNB transmits related signals on later-described DL channels to a UE, and the UE receives the related signals on the DL channels from the eNB.

(1) Physical Downlink Shared Channel (PDSCH)

The PDSCH carries DL data (e.g., a DL-shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a DMRS to resources, and transmitted through a corresponding antenna port.

(2) Physical Downlink Control Channel (PDCCH)

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH uses a fixed modulation scheme (e.g., QPSK). One PDCCH includes 1, 2, 4, 8, or 16 control channel elements (CCEs) according to its aggregation level (AL). One CCE includes 6 resource element groups (REGs), each REG being defined by one OFDM symbol by one (P)RB.

The PDCCH is transmitted in a control resource set (CORESET). The CORESET corresponds to a set of physical resources/parameters used to deliver the PDCCH/DCI in a BWP. For example, the CORESET is defined as a set of REGs with a given numerology (e.g., an SCS, a CP length, or the like). The CORESET may be configured by system information (e.g., a master information block (MIB)) or UE-specific higher-layer signaling (e.g., RRC signaling). For example, the following parameters/information may be used to configure a CORESET, and a plurality of CORESETs may overlap with each other in the time/frequency domain.

- controlResourceSetId: indicates the ID of a CORESET.
- frequencyDomainResources: indicates the frequency area resources of the CORESET. The frequency area resources are indicated by a bitmap, and each bit of the bitmap corresponds to an RB group (i.e., six consecutive RBs). For example, the most significant bit (MSB) of the bitmap corresponds to the first RB group of a BWP. An RB group corresponding to a bit set to 1 is allocated as frequency area resources of the CORESET.
- duration: indicates the time area resources of the CORESET. It indicates the number of consecutive OFDMA symbols in the CORESET. For example, the duration is set to one of 1 to 3.
- cce-REG-MappingType: indicates a CCE-to-REG mapping type. An interleaved type and a non-interleaved type are supported.
- precoderGranularity: indicates a precoder granularity in the frequency domain.
- tci-StatesPDCCH: provides information indicating a transmission configuration indication (TCI) state for the PDCCH (e.g., TCI-StateID). The TCI state is used to provide the quasi-co-location relation between DL RS(s) in an RS set (TCI-state) and PDCCH DMRS ports.
- tci-PresentInDCI: indicates whether a TCI field is included in DCI.
- pdcch-DMRS-ScramblingID: provides information used for initialization of a PDCCH DMRS scrambling sequence.

To receive the PDCCH, the UE may monitor (e.g., blind-decode) a set of PDCCH candidates in the CORESET. The PDCCH candidates are CCE(s) that the UE monitors for PDCCH reception/detection. The PDCCH monitoring may be performed in one or more CORESETs in an active DL BWP on each active cell configured with PDCCH monitoring. A set of PDCCH candidates monitored by the UE is defined as a PDCCH search space (SS) set. The SS set may be a common search space (CSS) set or a UE-specific search space (USS) set.

Table 4 lists exemplary PDCCH SSs.

[Table 4]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |

(continued)

| Type | Search Space | RNTI | Use Case |
|------|--------------|------|----------|
| UE Specific | UE Specific | C-RNTI, or MCS-C-RNTI, or CS-RNTI(s) | User specific PDSCH decoding |

The SS set may be configured by system information (e.g., MIB) or UE-specific higher-layer (e.g., RRC) signaling. S or fewer SS sets may be configured in each DLBWP of a serving cell. For example, the following parameters/information may be provided for each SS set. Each SS set may be associated with one CORESET, and each CORESET configuration may be associated with one or more SS sets. - searchSpaceId: indicates the ID of the SS set.

- controlResourceSetId: indicates a CORESET associated with the SS set.
- monitoringSlotPeriodicityAndOffset: indicates a PDCCH monitoring periodicity (in slots) and a PDCCH monitoring offset (in slots).
- monitoringSymbolsWithinSlot: indicates the first OFDMA symbol(s) for PDCCH monitoring in a slot configured with PDCCH monitoring. The OFDMA symbols are indicated by a bitmap and each bit of the bitmap corresponds to one OFDM symbol in the slot. The MSB of the bitmap corresponds to the first OFDM symbol of the slot. OFDMA symbol(s) corresponding to bit(s) set to 1 corresponds to the first symbol(s) of the CORESET in the slot.
- nrofCandidates: indicates the number of PDCCH candidates (e.g., one of 0, 1, 2, 3, 4, 5, 6, and 8) for each AL={1, 2, 4, 8, 16}.
- searchSpaceType: indicates whether the SS type is CSS or USS.
- DCI format: indicates the DCI format of PDCCH candidates.

The UE may monitor PDCCH candidates in one or more SS sets in a slot based on a CORESET/SS set configuration. An occasion (e.g., time/frequency resources) in which the PDCCH candidates should be monitored is defined as a PDCCH (monitoring) occasion. One or more PDCCH (monitoring) occasions may be configured in a slot.
Table 5 illustrates exemplary DCI formats transmitted on the PDCCH.

[Table 5]

| DCI format | Usage |
|------------|-------|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs. DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

UL Channel Structures

A UE transmits a related signal to the BS on a UL channel, which will be described later, and the BS receives the related signal from the UE through the UL channel to be described later.

(1) Physical Uplink Control Channel (PUCCH)

The PUCCH carries UCI, HARQ-ACK and/or scheduling request (SR), and is divided into a short PUCCH and a long PUCCH according to the PUCCH transmission length.
The UCI includes the following information.

- SR: information used to request UL-SCH resources.
- HARQ-ACK: a response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI: feedback information for a DL channel. Multiple input multiple output (MIMO)-related feedback information includes an RI and a PMI.

Table 6 illustrates exemplary PUCCH formats. PUCCH formats may be divided into short PUCCHs (Formats 0 and 2) and long PUCCHs (Formats 1, 3, and 4) based on PUCCH transmission durations.

[Table 6]

| PUCCH format | Length in OFDM symbols $N_{symb}^{PUCCH}$ | Number of bits | Usage | Etc |
|---|---|---|---|---|
| 0 | 1 - 2 | ≤2 | HARQ, SR | Sequence selection |
| 1 | 4 - 14 | ≤2 | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).
PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.
PUCCH format 3 does not support UE multiplexing in the same PRBs, and conveys UCI of more than 2 bits. In other words, PUCCH resources of PUCCH format 3 do not include an OCC. Modulation symbols are transmitted in TDM with the DMRS.
PUCCH format 4 supports multiplexing of up to 4 UEs in the same PRBs, and conveys UCI of more than 2 bits. In other words, PUCCH resources of PUCCH format 3 include an OCC. Modulation symbols are transmitted in TDM with the DMRS.

(2) Physical Uplink Shared Channel (PUSCH)

The PUSCH carries UL data (e.g., UL-shared channel transport block (UL-SCH TB)) and/or UL control information (UCI), and is transmitted based a Cyclic Prefix-Orthogonal Frequency Division Multiplexing (CP-OFDM) waveform or a Discrete Fourier Transform-spread-Orthogonal Frequency Division Multiplexing (DFT-s-OFDM) waveform. When the PUSCH is transmitted based on the DFT-s-OFDM waveform, the UE transmits the PUSCH by applying transform precoding. For example, when transform precoding is not allowed (e.g., transform precoding is disabled), the UE may transmit the PUSCH based on the CP-OFDM waveform. When transform precoding is allowed (e.g., transform precoding is enabled), the UE may transmit the PUSCH based on the CP-OFDM waveform or the DFT-s-OFDM waveform. PUSCH transmission may be dynamically scheduled by the UL grant in the DCI or may be semi-statically scheduled based on higher layer (e.g., RRC) signaling (and/or Layer 1 (L1) signaling (e.g., PDCCH)) (configured grant). PUSCH transmission may be performed on a codebook basis or a non-codebook basis.

System information acquisition

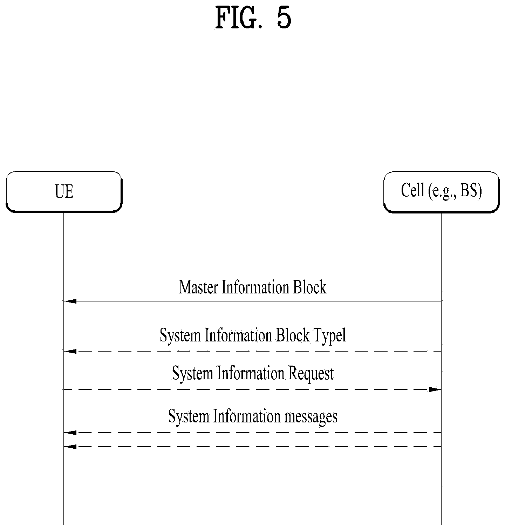

FIG. 5 illustrates a system information (SI) acquisition procedure. The UE may obtain access stratum (AS)-/non-access stratum (NAS)-information in the SI acquisition procedure. The SI acquisition procedure may be applied to UEs in RRC_IDLE, RRC_INACTIVE, and RRC_CONNECTED states.

SI is divided into a master information block (MIB) and a plurality of system information blocks (SIBs). The MIB and the plurality of SIBs are further divided into minimum SI and other SI. The minimum SI may include the MIB and systemInformationBlock1 (SIB1), carrying basic information required for initial access and information required to obtain the other SI. SIB1 may also be referred to as remaining minimum system information (RMSI). For details, the following may be referred to.

- The MIB includes information/parameters related to reception of SIB1 and is transmitted on the PBCH of an SSB. The UE assumes that a half-frame including an SSB is repeated every 20 ms during initial cell selection. The UE may determine from the MIB whether there is any control resource set (CORESET) for a TypeO-PDCCH common search space. The TypeO-PDCCH common search space is a kind of PDCCH search space and used to transmit a PDCCH that schedules an SI message. In the presence of a TypeO-PDCCH common search space, the UE may determine (1) a plurality of contiguous RBs and one or more consecutive symbols included in a CORESET, and (ii) a PDCCH occasion (e.g., a time-domain position at which a PDCCH is to be received), based on information (e.g., pdcch-ConfigSIB 1) included in the MIB. In the absence of a TypeO-PDCCH common search space, pdcch-ConfigSIB1 provides information about a frequency position at which the SSB/SIB1 exists and information about a frequency range without any SSB/SIB 1.
- SIB1 includes information related to availability and scheduling (e.g., a transmission periodicity and an SI-window size) of the remaining SIBs (hereinafter, referred to as SIBx where x is an integer equal to or larger than 2). For example, SIB1 may indicate whether SIBx is broadcast periodically or in an on-demand manner upon UE request. If SIBx is provided in the on-demand manner, SIB1 may include information required for the UE to transmit an SI request. A PDCCH that schedules SIB1 is transmitted in the TypeO-PDCCH common search space, and SIB1 is transmitted on a PDSCH indicated by the PDCCH.
- SIBx is included in an SI message and transmitted on a PDSCH. Each SI message is transmitted within a periodic time window (i.e., SI-window).

Beam alignment

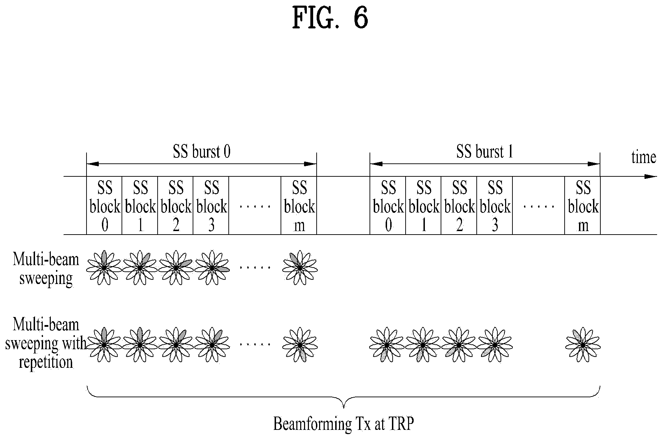

FIG. 6 illustrates exemplary multi-beam transmission of SSBs.

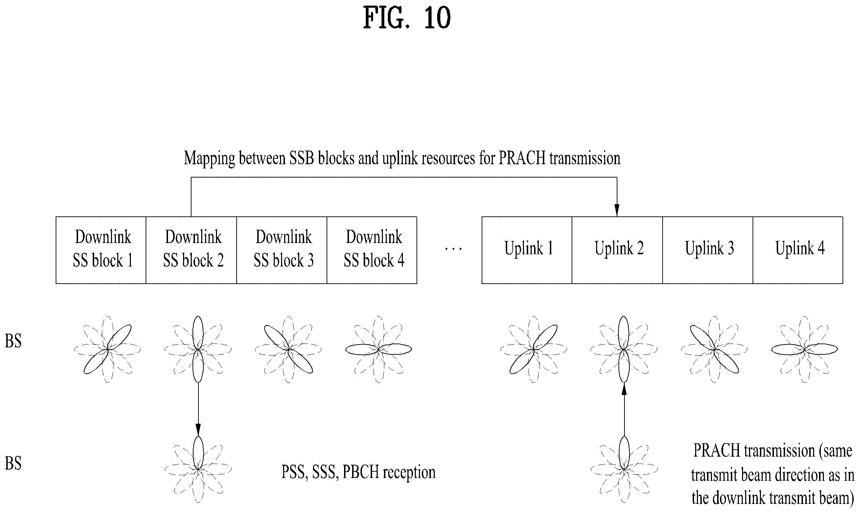

Beam sweeping refers to changing the beam (direction) of a wireless signal over time at a transmission reception point (TRP) (e.g., a BS/cell) (hereinafter, the terms beam and beam direction are interchangeably used). Referring to FIG. 10, an SSB may be transmitted periodically by beam sweeping. In this case, SSB indexes are implicitly linked to SSB beams. An SSB beam may be changed on an SSB (index) basis or on an SS (index) group basis. In the latter, the same SSB beam is maintained in an SSB (index) group. That is, the transmission beam direction of an SSB is repeated for a plurality of successive SSBs. The maximum allowed transmission number L of an SSB in an SSB burst set is 4, 8 or 64 according to the frequency band of a carrier. Accordingly, the maximum number of SSB beams in the SSB burst set may be given according to the frequency band of a carrier as follows.

- For frequency range of up to 3 GHz, maximum number of beams = 4

- For frequency range from 3 GHz to 6 GHz, maximum number of beams = 8
- For frequency range from 6 GHz to 52.6 GHz, maximum number of beams = 64

Without multi-beam transmission, the number of SSB beams is 1.

When the UE attempts initial access to the BS, the UE may align beams with the BS based on an SSB. For example, the UE performs SSB detection and then identifies a best SSB. Subsequently, the UE may transmit an RACH preamble in PRACH resources linked/corresponding to the index (i.e., beam) of the best SSB. The SSB may also be used for beam alignment between the BS and the UE even after the initial access.

Random access channel (RACH) procedure

When a UE first accesses a BS or has no radio resource for signal transmission, the UE may perform a RACH procedure upon the BS.

The RACH procedure may be used for various purposes. For example, the RACH procedure may be used for initial network access from RRC_IDLE, an RRC connection reestablishment procedure, handover, UE-triggered UL data transmission, transition from RRC_INACTIVE, time alignment establishment in SCell addition, other system information (OSI) request and beam failure recovery, and so on. The UE may acquire UL synchronization and UL transmission resources from the RACH procedure.

The RACH procedure may be divided into a contention-based RACH procedure and a contention-free RACH procedure. The contention-based RACH procedure may be divided into a 4-step RACH procedure (4-step RACH) and a 2-step RACH procedure (2-step RACH).

(1) 4-Step RACH: Type-1 Random Access Procedure

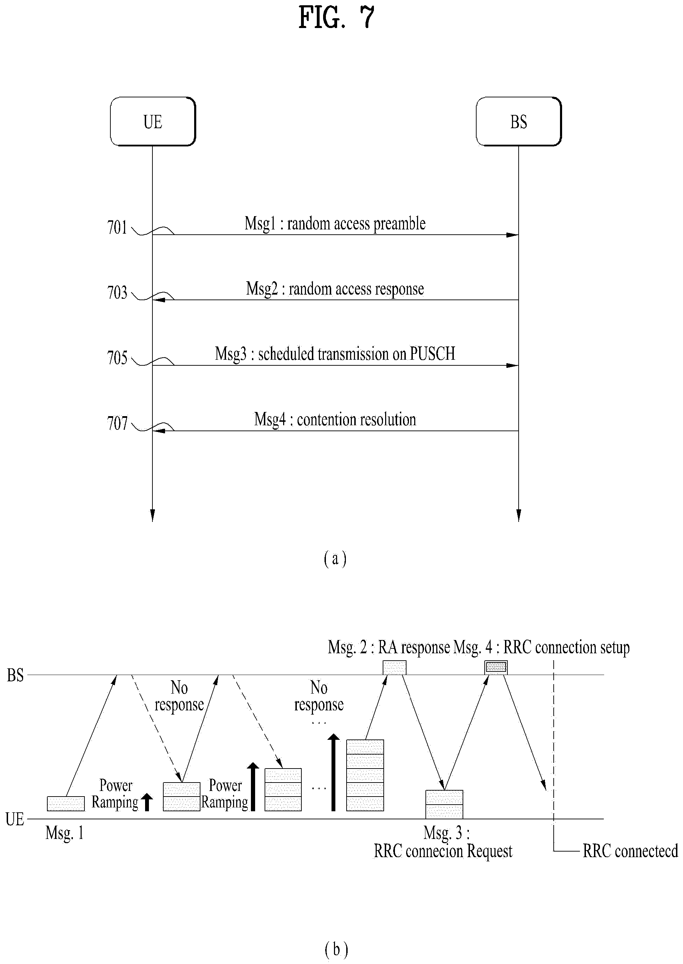

FIG. 7 is a diagram illustrating an exemplary 4-step RACH procedure.

If the (contention-based) RACH procedure is performed in four steps (i.e., 4-step RACH procedure), the UE may transmit a message (message 1 (Msg1)) including a preamble related to a specific sequence on a physical random access channel (PRACH) (701) and may receive a response message (random access response (RAR) message) (message 2 (Msg2)) to the preamble on a PDCCH and a PDSCH related thereto (703). The UE may transmit a message (message 3 (Msg3)) including a PUSCH based on scheduling information in the RAR (705). The UE may perform a contention resolution procedure by receiving a PDCCH signal and a PDSCH signal related thereto. To this end, the UE may receive a message (message 4 (Msg4)) containing contention resolution information on the contention resolution procedure from the BS (707).

The 4-step RACH procedure of the UE may be summarized as shown in Table 7 below.

[Table 7]

|  | Type of Signals | Operations/Infonnation obtained |
|---|---|---|
| 1st step | PRACH preamble in UL | * Initial beam obtainment<br>* Random selection of RA-preamble ID |
| 2nd step | Random Access Response on DL-SCH | * Timing Advanced information<br>* RA-preamble ID<br>* Initial UL grant, Temporary C-RNTI |
| 3rd step | UL transmission on UL-SCH | * RRC connection request<br>* UE identifier |
| 4th step | Contention Resolution on DL | * Temporary C-RNTI on PDCCH for initial access<br>* C-RNTI on PDCCH for UE in RRC_CONNECTED |

First, the UE may transmit a random access preamble over a PRACH in UL as Msg1 of the RACH procedure.

Random access preamble sequences of two different lengths are supported. Long sequence length 839 is applied with SCSs of 1.25 and 5 kHz, and short sequence length 139 is applied with SCSs of 15, 30, 60 and 120 kHz.

Multiple preamble formats are defined by one or more RACH OFDM symbols and different cyclic prefixes (and/or guard times). The RACH configuration for the initial bandwidth of a primary cell (Pcell) may be included in system information of the cell and provided to the UE. The RACH configuration includes information on the SCS of the PRACH, available preambles, preamble formats, and the like. The RACH configuration includes information on association between SSBs and RACH (time-frequency) resources. The UE transmits the random access preamble on a RACH time-frequency resource associated with a detected or selected SSB.

The threshold of SSBs may be configured by the network for association with RACH resources. The RACH preamble may be transmitted or retransmitted based on SSB(s) having reference signal received power (RSRP) measured based thereon satisfying the threshold. For example, the UE may select one of the SSB(s) that satisfy the threshold and transmit or retransmit the RACH preamble based on a RACH resource associated with the selected SSB. For example, upon retransmission of the RACH preamble, the UE may reselect one of the SSB(s) and retransmit the RACH preamble based on a RACH resource associated with the reselected SSB. That is, the RACH resource for retransmission of the RACH preamble may be the same as and/or different from the RACH resource for transmission of the RACH preamble.

When the BS receives a random access preamble from the UE, the BS transmits an RAR message (Msg2) to the UE. A PDCCH scheduling a PDSCH carrying the RAR is cyclic redundancy check (CRC) scrambled with a random access (RA) radio network temporary identifier (RNTI) (RA-RNTI) and then transmitted. Upon detecting the PDCCH CRC-scrambled with the RA-RNTI, the UE may receive the RAR from the PDSCH scheduled by DCI carried on the PDCCH. The UE checks whether the RAR includes RAR information in response to the preamble transmitted by the UE, i.e., Msg1. The presence or absence of the RAR information in response to Msg1 transmitted by the UE may be determined depending on whether there is a random access preamble ID for the preamble transmitted by the UE. If there is no response to Msg1, the UE may retransmit the RACH preamble within a predetermined number of times while performing power ramping. The UE may calculate PRACH transmission power for retransmitting the preamble based on the most recent transmission power, power increment, and power ramping counter.

The RAR information may include a preamble sequence transmitted by the UE, a temporary cell-RNTI (TC-RNTI) allocated by the BS to the UE that has attempted random access, and UL transmit time alignment information, UL transmission power adjustment information, and UL radio resource allocation information. If the UE receives the RAR information for itself on the PDSCH, the UE may obtain timing advance information for UL synchronization, an initial UL grant, a TC- RNTI. The timing advance information may be used to control a UL signal transmission timing. To better align PUSCH/PUCCH transmission by the UE with the subframe timing at the network, the network (e.g., BS) may obtain the timing advance information based on timing information detected from a PRACH preamble received from the UE and transmit the timing advance information to the UE. The UE may transmit a UL signal over a UL shared channel based on the RAR information as Msg3 of the RACH procedure. Msg3 may include an RRC connection request and a UE identifier. In response to Msg3, the network may transmit Msg4, which may be treated as a contention resolution message on DL. Upon receiving Msg4, the UE may enter the RRC_CONNECTED state.

As described above, a UL grant in the RAR may schedule PUSCH transmission to the BS. A PUSCH carrying initial UL transmission based on the UL grant in the RAR is also referred to as a Msg3 PUSCH. The content of an RAR UL grant may start at the MSB and end at the LSB, and the content may be given as shown in Table 8.

[Table 8]

| RAR UL grant field | Number of bits |
|---|---|
| Frequency hopping flag | 1 |
| Msg3 PUSCH frequency resource allocation | 12 |
| Msg3 PUSCH time resource allocation | 4 |
| Modulation and coding scheme (MCS) | 4 |
| Transmit power control (TPC) for Msg3 PUSCH | 3 |
| CSI request | 1 |

A TPC command is used to determine the transmission power of the Msg3 PUSCH. For example, the TPC command may be interpreted as shown in Table 9.

[Table 9]

| TPC command | value [dB] |
|---|---|
| 0 | -6 |
| 1 | -4 |
| 2 | -2 |

(continued)

| TPC command | value [dB] |
|:---:|:---:|
| 3 | 0 |
| 4 | 2 |
| 5 | 4 |
| 6 | 6 |
| 7 | 8 |

(2) 2-Step RACH: Type-2 Random Access Procedure

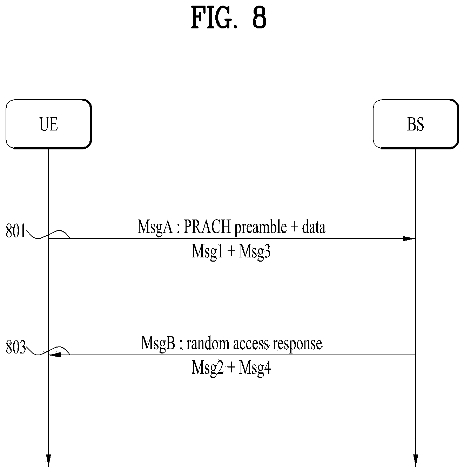

FIG. 8 is a diagram illustrating an exemplary 2-step RACH procedure.

The 2-step RACH procedure in which the (contention-based) RACH procedure is performed in two steps has been proposed to simplify the RACH procedure, that is, to achieve low signaling overhead and low latency.

The operations of transmitting Msg1 and Msg3 in the 4-step RACH procedure may be performed as one operation in the 2-step RACH procedure where the UE transmits one message (message A (MsgA)) including a PRACH and a PUSCH. The operations in which the BS transmits Msg2 and Msg4 in the 4-step RACH procedure may be performed as one operation in the 2-step RACH procedure where the BS transmits one message (message B (MsgB)) including an RAR and contention resolution information.

That is, in the 2-step RACH procedure, the UE may combine Msg1 and Msg3 of the 4-step RACH procedure into one message (e.g., MsgA) and transmit the one message to the BS (801).

In addition, in the 2-step RACH procedure, the BS may combine Msg2 and Msg4 of the 4-step RACH procedure into one message (e.g., MsgB) and transmit the one message to the UE (S803).

Based on the combination of these messages, the 2-step RACH procedure may provide a low-latency RACH procedure.

Specifically, MsgA of the 2-step RACH procedure may include a PRACH preamble contained in Msg1 and data contained in Msg3. MsgB of the 2-step RACH procedure may include an RAR contained in Msg2 and contention resolution information contained in Msg4.

(3) Contention-free RACH

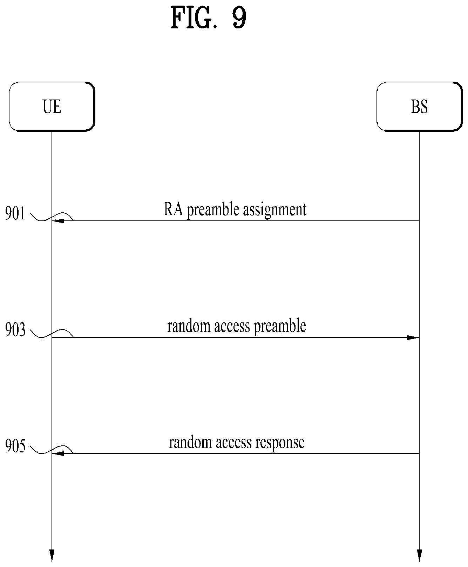

FIG. 9 is a diagram illustrating an exemplary contention-free RACH procedure.

The contention-free RACH procedure may be used when the UE is handed over to another cell or BS or when requested by a command from the BS. The basic steps of the contention-free RACH procedure are similar to those of the contention-based RACH procedure. However, in the contention-free RACH procedure, the BS allocates a preamble to be used by the UE (hereinafter, dedicated random access preamble) to the UE (901), unlike the contention-based RACH procedure in which the UE arbitrarily selects a preamble to be used from among a plurality of random access preambles. Information on the dedicated random access preamble may be included in an RRC message (e.g., handover command) or provided to the UE through a PDCCH order. When the RACH procedure is initiated, the UE transmits the dedicated random access preamble to the BS (903). When the UE receives an RAR from the BS, the RACH procedure is completed (905).

In the contention-free RACH procedure, a CSI request field in an RAR UL grant indicates whether the UE includes an aperiodic CSI report in corresponding PUSCH transmission. The SCS for Msg3 PUSCH transmission is provided by an RRC parameter. The UE may transmit a PRACH and a Msg3 PUSCH on the same UL carrier of the same serving cell. The UL BWP for Msg3 PUSCH transmission is indicated by system information block 1 (SIB 1).

(4) Mapping between SSBs and PRACH resources (occasions)

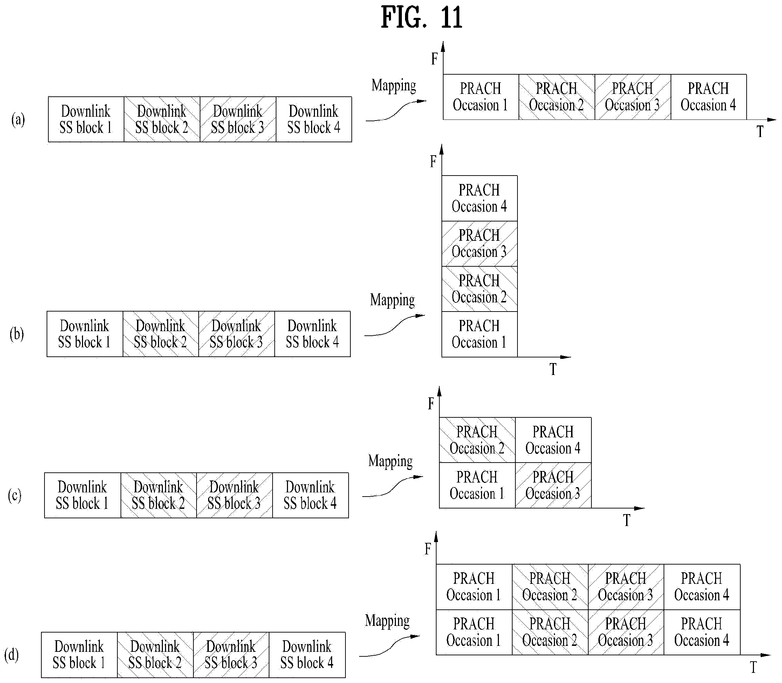

FIGS. 10 and 11 are diagrams illustrating transmission of SSBs and PRACH resources linked to the SSBs according to various embodiments of the present disclosure.

To communicate with one UE, the BS may need to find out what is the optimal beam direction between the BS and UE. Since it is expected that the optimal beam direction will vary according to the movement of the UE, the BS needs to continuously track the optimal beam direction. A process of finding out the optimal beam direction between the B S and UE is called a beam acquisition process, and a process of continuously tracking the optimal beam direction between the BS and UE is called a beam tracking process. The beam acquisition process may be required in the following cases: 1) initial access where the UE attempts to access the BS for the first time; 2) handover where the UE is handed over from one BS to another BS; and 3) beam recovery for recovering beam failure. The beam failure means a state in which while performing the beam tracking to find out the optimal beam between the UE and BS, the UE loses the optimal beam and thus is incapable of maintaining the optimal communication state with the BS or incapable of communicating with the BS.

In the NR system, a multi-stage beam acquisition process is being discussed for beam acquisition in an environment using multiple beams. In the multi-stage beam acquisition process, the BS and UE perform a connection setup by using a wide beam in the initial access stage. After the connection setup is completed, the BS and UE perform the highest quality of communication by using a narrow beam. The beam acquisition process in the NR system applicable to various embodiments of the present disclosure may be performed as follows.

- 1) The BS transmits a synchronization block for each wide beam to allow the UE to discover the BS in the initial access stage, that is, in order for the UE to find the optimal wide beam to be used in the first stage of the beam acquisition by performing cell search or cell acquisition and measuring the channel quality of each wide beam.
- 2) The UE performs the cell search on the synchronization block for each beam and acquires a DL beam based on the detection result for each beam.
- 3) The UE performs a RACH procedure to inform the BS that the UE discovers that the UE intends to access the BS.
- 4) The BS connects or associates the synchronization block transmitted for each beam with a PRACH resource to be used for PRACH transmission to allow the UE to simultaneously inform the RACH procedure and the DL beam acquisition result (e.g., beam index) at wide beam levels. If the UE performs the RACH procedure on a PRACH resource associated with the optimal beam direction that the UE finds, the BS obtains information on the DL beam suitable for the UE by receiving a PRACH preamble.

In the multi-beam environment, it is a problem whether the UE and/or TRP is capable of accurately determining the directions of a transmission (TX) and/or reception (RX) beam between the UE and TRP. In the multi-beam environment, repetition of signal transmission or beam sweeping for signal reception may be considered based on the TX/RX reciprocal capability of the TRP (e.g., BS) or UE. The TX/RX reciprocal capability of the TRP and UE is also referred to as TX/RX beam correspondence of the TRP and UE. In the multi-beam environment, if the TX/RX reciprocal capability of the TRP and UE is not valid (that is, not held), the UE may not be capable of transmitting a UL signal in the beam direction in which the UE receives a DL signals. This is because the UL optimal path may be different from the DL optimal path. The TX/RX beam correspondence of the TRP may be valid (held) if the TRP is capable of determining a TRP RX beam for UL reception based on DL measurements measured by the UE for one or more TX beams of the TRP and/or if the TRP is capable of determining a TRP TX beam for DL transmission based on UL measurements measured by the TRP for one or more RX beams of the TRP. The TX/RX beam correspondence of the UE may be valid (held) if the UE is capable of determining a UE RX beam for UL transmission based on DL measurements measured by the UE for one or more RX beams of the UE and/or if the UE is capable of determining a UE TX beam for DL reception based on an indication from the TRP, which is related to UL measurements for one or more TX beams of the UE.

On DL, the BS may dynamically allocate resources for DL transmission to the UE by PDCCH(s) (including DCI format 1_0 or DCI format 1_1). Further, the BS may indicate to a specific UE that some of resources pre-scheduled for the UE have been pre-empted for signal transmission to another UE, by PDCCH(s) (including DCI format 2_1). Further, the BS may configure a DL assignment periodicity by higher-layer signaling and signal activation/deactivation of a configured DL assignment by a PDCCH in a semi-persistent scheduling (SPS) scheme, to provide a DL assignment for an initial HARQ transmission to the UE. When a retransmission for the initial HARQ transmission is required, the BS explicitly schedules retransmission resources through a PDCCH. When a DCI-based DL assignment collides with an SPS-based DL assignment, the UE may give priority to the DCI-based DL assignment.

Similarly to DL, for UL, the BS may dynamically allocate resources for UL transmission to the UE by PDCCH(s) (including DCI format 0_0 or DCI format 0_1). Further, the BS may allocate UL resources for initial HARQ transmission to the UE based on a configured grant (CG) method (similarly to SPS). Although dynamic scheduling involves a PDCCH for a PUSCH transmission, a configured grant does not involve a PDCCH for a PUSCH transmission. However, UL resources for retransmission are explicitly allocated by PDCCH(s). As such, an operation of preconfiguring UL resources without a dynamic grant (DG) (e.g., a UL grant through scheduling DCI) by the BS is referred to as a "CG". Two types are defined for the CG.

- Type 1: a UL grant with a predetermined periodicity is provided by higher-layer signaling (without L1 signaling).
- Type 2: the periodicity of a UL grant is configured by higher-layer signaling, and activation/deactivation of the CG is signaled by a PDCCH, to provide the UL grant.

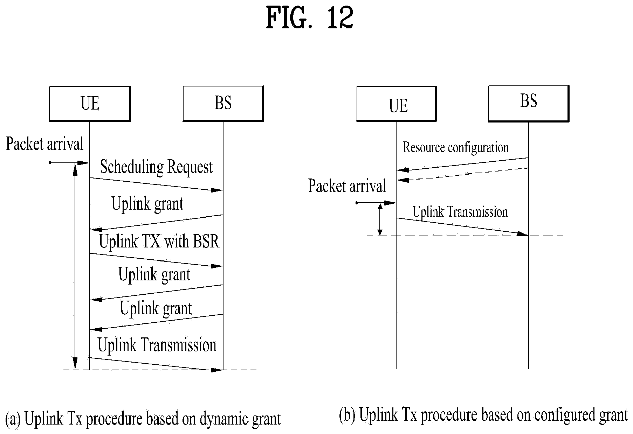

FIG. 12 illustrates exemplary UL transmission operations of a UE. The UE may transmit an intended packet based on a DG (FIG. 12(a)) or based on a CG (FIG. 12(b)).

Resources for CGs may be shared between a plurality of UEs. AUL signal transmission based on a CG from each UE may be identified by time/frequency resources and an RS parameter (e.g., a different cyclic shift or the like). Therefore, when a UE fails in transmitting a UL signal due to signal collision, the BS may identify the UE and explicitly transmit a retransmission grant for a corresponding TB to the UE.

K repeated transmissions including an initial transmission are supported for the same TB by a CG. The same HARQ process ID is determined for K times repeated UL signals based on resources for the initial transmission. The redundancy versions (RVs) of a K times repeated TB have one of the patterns {0, 2, 3, 1}, {0, 3, 0, 3}, and {0, 0, 0, 0}.

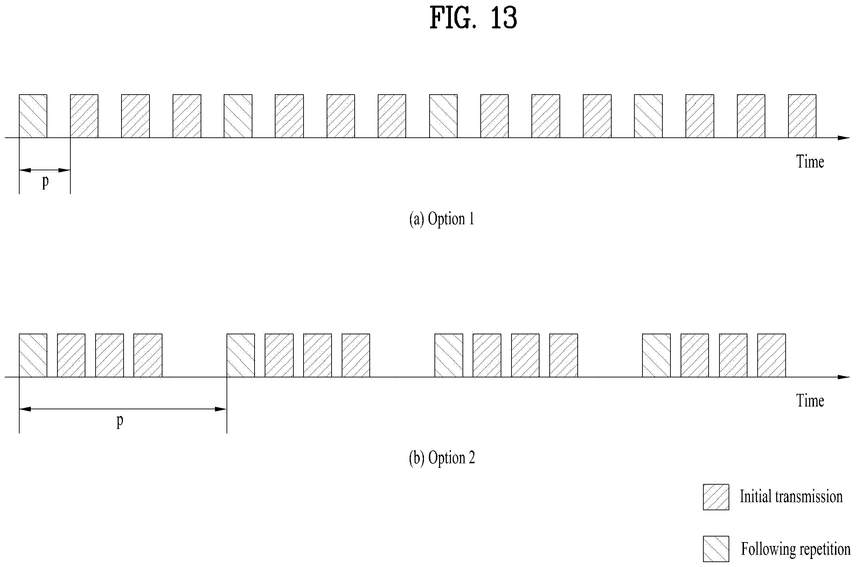

FIG. 13 illustrates exemplary repeated transmissions based on a CG.

The UE performs repeated transmissions until one of the following conditions is satisfied:

- A UL grant for the same TB is successfully received;
- The repetition number of the TB reaches K; and
- (In Option 2) the ending time of a period P is reached.

Similarly to licensed-assisted access (LAA) in the legacy 3GPP LTE system, use of an unlicensed band for cellular communication is also under consideration in a 3GPP NR system. Unlike LAA, a stand-along (SA) operation is aimed in an NR cell of an unlicensed band (hereinafter, referred to as NR unlicensed cell (UCell)). For example, PUCCH, PUSCH, and PRACH transmissions may be supported in the NR UCell.

On LAA UL, with the introduction of an asynchronous HARQ procedure, there is no additional channel such as a physical HARQ indicator channel (PHICH) for indicating HARQ-ACK information for a PUSCH to the UE. Therefore, accurate HARQ-ACK information may not be used to adjust a contention window (CW) size in a UL LBT procedure. In the UL LBT procedure, when a UL grant is received in the n-th subframe, the first subframe of the most recent UL transmission burst prior to the (n-3)-th subframe has been configured as a reference subframe, and the CW size has been adjusted based on a new data indicator (NDI) for a HARQ process ID corresponding to the reference subframe. That is, when the BS toggles NDIs per one or more transport blocks (TBs) or instructs that one or more TBs be retransmitted, a method has been introduced of increasing the CW size to the next largest CW size of a currently applied CW size in a set for pre-agreed CW sizes under the assumption that transmission of a PUSCH has failed in the reference subframe due to collision with other signals or initializing the CW size to a minimum value (e.g., CWmin) under the assumption that the PUSCH in the reference subframe has been successfully transmitted without any collision with other signals.

In an NR system to which various embodiments of the present disclosure are applicable, up to 400 MHz per component carrier (CC) may be allocated/supported. When a UE operating in such a wideband CC always operates with a radio frequency (RF) module turned on for the entire CC, battery consumption of the UE may increase.

Alternatively, considering various use cases (e.g., eMBB, URLLC, mMTC, and so on) operating within a single wideband CC, a different numerology (e.g., SCS) may be supported for each frequency band within the CC.

Alternatively, each UE may have a different maximum bandwidth capability.

In this regard, the BS may indicate to the UE to operate only in a partial bandwidth instead of the total bandwidth of the wideband CC. The partial bandwidth may be defined as a bandwidth part (BWP).

A BWP may be a subset of contiguous RBs on the frequency axis. One BWP may correspond to one numerology (e.g., SCS, CP length, slot/mini-slot duration, and so on).

The BS may configure multiple BWPs in one CC configured for the UE. For example, the BS may configure a BWP occupying a relatively small frequency area in a PDCCH monitoring slot, and schedule a PDSCH indicated (or scheduled) by a PDCCH in a larger BWP. Alternatively, when UEs are concentrated on a specific BWP, the BS may configure another BWP for some of the UEs, for load balancing. Alternatively, the BS may exclude some spectrum of the total bandwidth and configure both-side BWPs of the cell in the same slot in consideration of frequency-domain inter-cell interference cancellation between neighboring cells.

The BS may configure at least one DL/LTL BWP for a UE associated with the wideband CC, activate at least one of DL/UL BWP(s) configured at a specific time point (by L1 signaling (e.g., DCI), MAC signaling, or RRC signaling), and indicate switching to another configured DL/UL BWP (by L1 signaling, MAC signaling, or RRC signaling). Further, upon expiration of a timer value (e.g., a BWP inactivity timer value), the UE may switch to a predetermined DL/LTL BWP. The activated DL/LTL BWP may be referred to as an active DL/LTL BWP. During initial access or before an RRC connection setup, the UE may not receive a configuration for a DL/LTL BWP from the BS. ADL/LTL BWP that the UE assumes in this situation is defined as an initial active DL/LTL BWP.

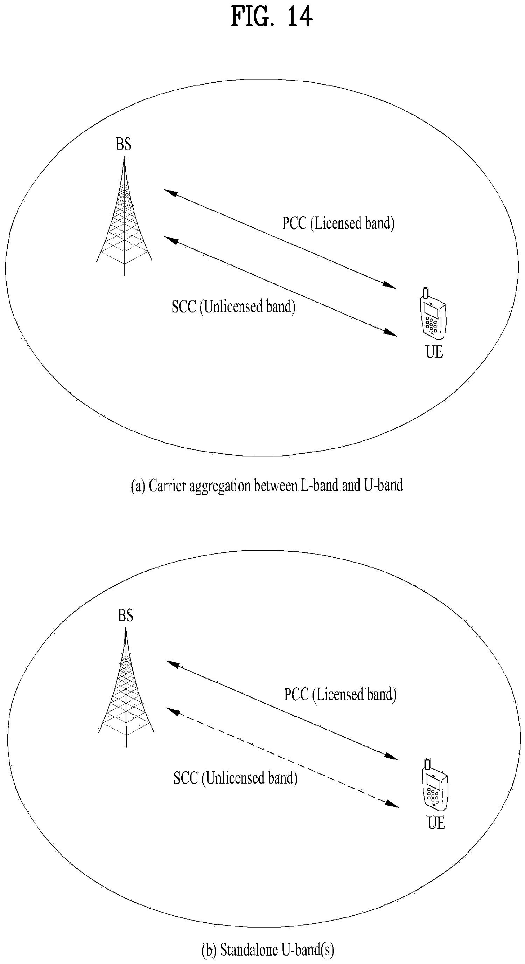

FIG. 14 illustrates an exemplary wireless communication system supporting an unlicensed band applicable to the present disclosure.

In the following description, a cell operating in a licensed band (L-band) is defined as an L-cell, and a carrier of the L-cell is defined as a (DL/LTL) LCC. A cell operating in an unlicensed band (U-band) is defined as a U-cell, and a carrier of the U-cell is defined as a (DL/LTL) UCC. The carrier/carrier-frequency of a cell may refer to the operating frequency (e.g., center frequency) of the cell. A cell/carrier (e.g., CC) is commonly called a cell.

When a BS and a UE transmit and receive signals on carrier-aggregated LCC and UCC as illustrated in FIG. 7(a), the LCC and the UCC may be configured as a primary CC (PCC) and a secondary CC (SCC), respectively. The BS and the UE may transmit and receive signals on one UCC or on a plurality of carrier-aggregated UCCs as illustrated in FIG. 7(b). In other words, the BS and UE may transmit and receive signals only on UCC(s) without using any LCC. For an SA operation, PRACH, PUCCH, PUSCH, and SRS transmissions may be supported on a UCell.

Signal transmission and reception operations in an unlicensed band as described in the present disclosure may be applied to the afore-mentioned deployment scenarios (unless specified otherwise).

Unless otherwise noted, the definitions below are applicable to the following terminologies used in the present disclosure.

- Channel: a carrier or a part of a carrier composed of a contiguous set of RBs in which a channel access procedure (CAP) is performed in a shared spectrum.
- Channel access procedure (CAP): a procedure of assessing channel availability based on sensing before signal transmission in order to determine whether other communication node(s) are using a channel. A basic sensing unit is a sensing slot with a duration of $T_{s1}$ = 9 us. The BS or the UE senses the slot during a sensing slot duration. When power detected for at least 4 us within the sensing slot duration is less than an energy detection threshold $X_{thresh}$, the sensing slot duration $T_{s1}$ is be considered to be idle. Otherwise, the sensing slot duration $T_{s1}$ is considered to be busy. CAP may also be called listen before talk (LBT).
- Channel occupancy: transmission(s) on channel(s) from the BS/UE after a CAP.
- Channel occupancy time (COT): a total time during which the BS/UE and any BS/UE(s) sharing channel occupancy performs transmission(s) on a channel after a CAP. Regarding COT determination, if a transmission gap is less than or equal to 25 us, the gap duration may be counted in a COT. The COT may be shared for transmission between the BS and corresponding UE(s).

The COT may be shared for transmission between the BS and corresponding UE(s).

Specifically, sharing a UE-initiated COT with the BS may mean an operation in which the UE assigns a part of occupied channels through random backoff-based LBT (e.g., Category 3 (Cat-3) LBT or Category 4 (Cat-4) LBT) to the BS and the BS performs DL transmission using a remaining COT of the UE, when it is confirmed that a channel is idle by success of LBT after performing LBT without random backoff (e.g., Category 1 (Cat-1) LBT or Category 2 (Cat-2) LBT) using a timing gap occurring before DL transmission start from a UL transmission end timing of the UE.

Meanwhile, sharing a gNB-initiated COT with the UE may mean an operation in which the BS assigns a part of occupied channels through random backoff-based LBT (e.g., Cat-3 LBT or Cat-4 LBT) to the UE and the UE performs UL transmission using a remaining COT of the BS, when it is confirmed that a channel is idle by success of LBT after performing LBT without random backoff (e.g., Cat-1 LBT or Cat-2 LBT) using a timing gap occurring before UL transmission start from a DL transmission end timing of the BS.

- DL transmission burst: a set of transmissions without any gap greater than 16 us from the BS. Transmissions from the BS, which are separated by a gap exceeding 16 us are considered as separate DL transmission bursts. The BS may perform transmission(s) after a gap without sensing channel availability within a DL transmission burst.
- UL transmission burst: a set of transmissions without any gap greater than 16 us from the UE. Transmissions from the UE, which are separated by a gap exceeding 16 us are considered as separate UL transmission bursts. The UE may perform transmission(s) after a gap without sensing channel availability within a DL transmission burst.
- Discovery burst: a DL transmission burst including a set of signal(s) and/or channel(s) confined within a window and associated with a duty cycle. The discovery burst may include transmission(s) initiated by the BS, which includes a PSS, an SSS, and a cell-specific RS (CRS) and further includes a non-zero power CSI-RS. In the NR system, the discover burst includes may include transmission(s) initiated by the BS, which includes at least an SS/PBCH block and further includes a CORESET for a PDCCH scheduling a PDSCH carrying SIB1, the PDSCH carrying SIB1, and/or a non-zero power CSI-RS.

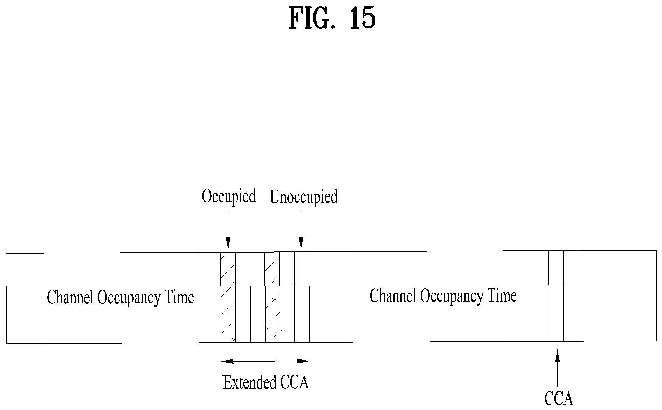

FIG. 15 illustrates an exemplary method of occupying resources in an unlicensed band.

Referring to FIG. 15, a communication node (e.g., a BS or a UE) operating in an unlicensed band should determine whether other communication node(s) is using a channel, before signal transmission. For this purpose, the communication node may perform a CAP to access channel(s) on which transmission(s) is to be performed in the unlicensed band. The CAP may be performed based on sensing. For example, the communication node may determine whether other communication node(s) is transmitting a signal on the channel(s) by carrier sensing (CS) before signal transmission. Determining that other communication node(s) is not transmitting a signal is defined as confirmation of clear channel assessment (CCA). In the presence of a CCA threshold (e.g., Xthresh) which has been predefined or configured by higher-layer (e.g., RRC) signaling, the communication node may determine that the channel is busy, when detecting energy higher than the CCA threshold in the channel. Otherwise, the communication node may determine that the channel is idle. When determining that the channel is idle, the communication node may start to transmit a signal in the unlicensed band. CAP may be replaced with LBT.

Table 10 describes an exemplary CAP supported in NR-U.

[Table 10]

| | Type | Explanation |
|---|---|---|
| DL | Type 1 CAP | CAP with random backoff<br>- time duration spanned by the sensing slots that are sensed to be idle before a downlink transmission(s) is random |
| | Type 2 CAP<br>- Type 2A, 2B, 2C | CAP without random backoff<br>- time duration spanned by sensing slots that are sensed to be idle before a downlink transmission(s) is deterministic |
| UL | Type 1 CAP | CAP with random backoff<br>- time duration spanned by the sensing slots that are sensed to be idle before a downlink transmission(s) is random |
| | Type 2 CAP<br>- Type 2A, 2B, 2C | CAP without random backoff<br>- time duration spanned by sensing slots that are sensed to be idle before a downlink transmission(s) is deterministic |

In a wireless communication system supporting an unlicensed band, one cell (or carrier (e.g., CC)) or BWP configured for a UE may be a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information. A plurality of LBT-SBs may be included in the BWP of a cell (or carrier). An LBT-SB may be, for example, a 20-MHz band. The LBT-SB may include a plurality of contiguous (P)RBs in the frequency domain, and thus may be referred to as a (P)RB set.

In Europe, two LBT operations are defined: frame based equipment (FBE) and load based equipment (LBE). In FBE, one fixed frame is made up of a channel occupancy time (e.g., 1 to 10 ms), which is a time period during which once a communication node succeeds in channel access, the communication node may continue transmission, and an idle period corresponding to at least 5% of the channel occupancy time, and CCA is defined as an operation of observing a channel during a CCA slot (at least 20 us) at the end of the idle period. The communication node performs CCA periodically on a fixed frame basis. When the channel is unoccupied, the communication node transmits during the channel occupancy time, whereas when the channel is occupied, the communication node defers the transmission and waits until a CCA slot in the next period.

In LBE, the communication node may set $q \in \{4, 5, ... , 32\}$ and then perform CCA for one CCA slot. When the channel is unoccupied in the first CCA slot, the communication node may secure a time period of up to $(13/32)q$ ms and transmit data in the time period. When the channel is occupied in the first CCA slot, the communication node randomly selects $N \in \{1, 2, ... , q\}$, stores the selected value as an initial value, and then senses a channel state on a CCA slot basis. Each time the channel is unoccupied in a CCA slot, the communication node decrements the stored counter value by 1. When the counter value reaches 0, the communication node may secure a time period of up to $(13/32)q$ ms and transmit data.

An eNB/gNB or UE of an LTE/NR system should also perform LBT for signal transmission in an unlicensed band (referred to as a U-band for convenience). When the eNB or UE of the LTE/NR system transmits a signal, other communication nodes such as a Wi-Fi node should also perform LBT so as not to cause interference with transmission by the eNB or the UE. For example, in the Wi-Fi standard (801.11ac), a CCA threshold is defined as -62 dBm for a non-Wi-Fi signal and -82 dBm for a Wi-Fi signal. For example, when the non-Wi-Fi signal is received by a station (STA) or an access point (AP) with a power of more than - 62 dBm, the STA or AP does not transmit other signals in order not to cause interference.

A UE performs a Type 1 or Type 2 CAP for a UL signal transmission in a U-band. In general, the UE may perform a CAP (e.g., Type 1 or Type 2) configured by a BS, for a UL signal transmission. For example, CAP type indication information may be included in a UL grant (e.g., DCI format 0_0 or DCI format 0_1) that schedules a PUSCH transmission.

In the Type 1 UL CAP, the length of a time period spanned by sensing slots sensed as idle before transmission(s) is random. The Type 1 UL CAP may be applied to the following transmissions.

- PUSCH/SRS transmission(s) scheduled and/or configured by BS
- PUCCH transmission(s) scheduled and/or configured by BS
- Transmission(s) related to random access procedure (RAP)

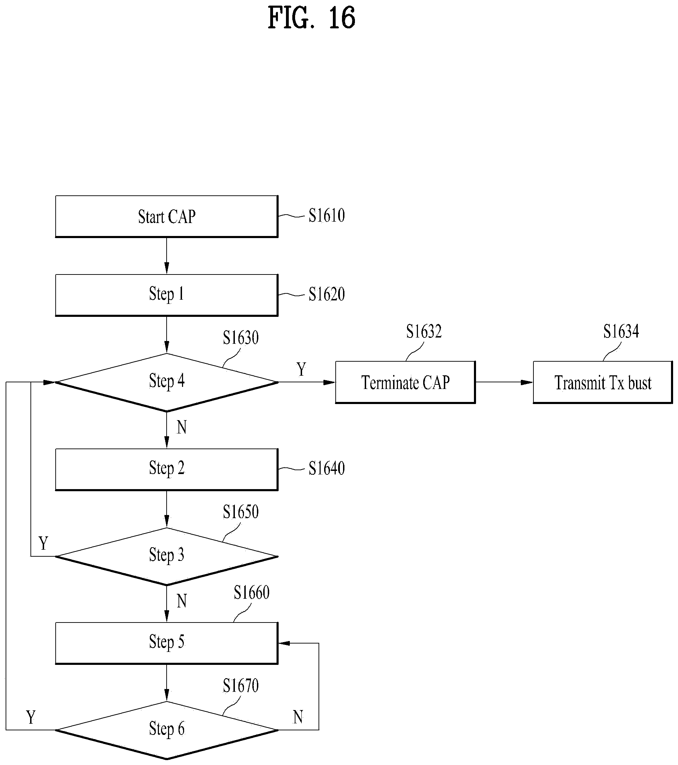

FIG. 16 illustrates a Type 1 CAP among CAPs of the UE for UL signal transmission and/or DL signal transmission in a U-band applicable to the present disclosure.

First, UL signal transmission in the U-band will be described with reference to FIG. 16.

The UE may sense whether a channel is idle for a sensing slot duration in a defer duration Td. After a counter N is decremented to 0, the UE may perform a transmission (S934). The counter N is adjusted by sensing the channel for additional slot duration(s) according to the following procedure.

Step 1) Set $N=N_{init}$ where $N_{init}$ is a random number uniformly distributed between 0 and $CW_p$, and go to step 4 (S1620).

Step 2) If N > 0 and the UE chooses to decrement the counter, set N=N-1 (S1640).

Step 3) Sense the channel for an additional slot duration, and if the additional slot duration is idle (Y), go to step 4. Else (N), go to step 5 (S1650).

Step 4) If N=0 (Y) (S1630), stop CAP (S1632). Else (N), go to step 2.

Step 5) Sense the channel until a busy sensing slot is detected within the additional defer duration Td or all slots of the additional defer duration Td are sensed as idle (S1660).

Step 6) If the channel is sensed as idle for all slot durations of the additional defer duration $T_d$ (Y), go to step 4. Else (N), go to step 5 (S1670).

Table 11 illustrates that $m_p$, a minimum CW, a maximum CW, a maximum channel occupancy time (MCOT), and an allowed CW size applied to a CAP vary according to channel access priority classes.

[Table 11]

| Channel Access Priority Class (p) | mp | CWmin ,p | CWmax, p | Tulmcot, p | allowed CWp sizes |
|---|---|---|---|---|---|
| 1 | 2 | 3 | 7 | 2ms | {3,7} |
| 2 | 2 | 7 | 15 | 4ms | {7,15} |
| 3 | 3 | 15 | 1023 | 6 or 10 ms | {15,31,63,127,255,511, 1023} |
| 4 | 7 | 15 | 1023 | 6 or 10 ms | {15,31,63,127,255,511, 1023} |

The defer duration $T_d$ includes a duration $T_f$ (16 us) immediately followed by $m_p$ consecutive slot durations where each slot duration $T_{sl}$ is 9 us, and Tf includes a sensing slot duration $T_{sl}$ at the start of the 16-us duration. $CW_{Wmin,p}$ <= $CW_p$ <= $CW_{max,p}$. $CW_p$ is set to $CW_{min,p}$, and may be updated before Step 1 based on an explicit/implicit reception response to a previous UL burst (e.g., PUSCH) (CW size update). For example, $CW_p$ may be initialized to $CW_{min,p}$ based on an explicit/implicit reception response to the previous UL burst, may be increased to the next higher allowed value, or may be maintained to be an existing value.

In the Type 2 UL CAP, the length of a time period spanned by sensing slots sensed as idle before transmission(s) is deterministic. Type 2 UL CAPs are classified into Type 2A UL CAP, Type 2B UL CAP, and Type 2C UL CAP. In the Type 2A UL CAP, the UE may transmit a signal immediately after the channel is sensed as idle during at least a sensing duration $T_{short\_dl}$ (=25 us). $T_{short\_dl}$ includes a duration Tf (=16 us) and one immediately following sensing slot duration. In the Type 2A UL CAP, Tf includes a sensing slot at the start of the duration. In the Type 2B UL CAP, the UE may transmit a signal immediately after the channel is sensed as idle during a sensing slot duration Tf (=16 us). In the Type 2B UL CAP, Tf includes a sensing slot within the last 9 us of the duration. In the Type 2C UL CAP, the UE does not sense a channel before a transmission.

To allow the UE to transmit UL data in the U-band, the BS should succeed in an LBT operation to transmit a UL grant in the U-band, and the UE should also succeed in an LBT operation to transmit the UL data. That is, only when both of the BS and the UE succeed in their LBT operations, the UE may attempt the UL data transmission. Further, because a delay of at least 4 msec is involved between a UL grant and scheduled UL data in the LTE system, earlier access from another transmission node coexisting in the U-band during the time period may defer the scheduled UL data transmission of the UE. In this context, a method of increasing the efficiency of UL data transmission in a U-band is under discussion.

To support a UL transmission having a relatively high reliability and a relatively low time delay, NR also supports CG type 1 and CG type 2 in which the BS preconfigures time, frequency, and code resources for the UE by higher-layer signaling (e.g., RRC signaling) or both of higher-layer signaling and L1 signaling (e.g., DCI). Without receiving a UL grant from the BS, the UE may perform a UL transmission in resources configured with type 1 or type 2. In type 1, the periodicity of a CG, an offset from SFN=0, time/frequency resource allocation, a repetition number, a DMRS parameter, an MCS/TB size (TBS), a power control parameter, and so on are all configured only by higher-layer signaling such as RRC signaling, without L1 signaling. Type 2 is a scheme of configuring the periodicity of a CG and a power control parameter by higher-layer signaling such as RRC signaling and indicating information about the remaining resources (e.g., the offset of an initial transmission timing, time/frequency resource allocation, a DMRS parameter, and an MCS/TBS) by activation DCI as L1 signaling.

AUL of LTE LAA and a CG of NR show a big difference in terms of a method of transmitting HARQ-ACK feedback for a PUSCH that the UE has transmitted without receiving the UL grant and in terms of the presence or absence of UCI transmitted along with the PUSCH. While a HARQ process is determined by an equation of a symbol index, a symbol periodicity, and the number of HARQ processes in the CG of NR, explicit HARQ-ACK feedback information is transmitted in AUL downlink feedback information (AUL-DFI) in LTE LAA. Further, in LTE LAA, UCI including information such as a HARQ ID, an NDI, and an RV is also transmitted in AUL UCI whenever AUL PUSCH transmission is performed. In the case of the CG of NR, the BS identifies the UE by time/frequency resources and DMRS resources used by the UE for PUSCH transmission, whereas in the case of LTE LAA, the BS identifies the UE by a UE ID explicitly included in the AUL UCI transmitted together with the PUSCH as well as the DMRS resources.

Now, DL signal transmission in the U-band will be described with reference to FIG. 16.

The BS may perform one of the following U-band access procedures (e.g., channel access procedures (CAPs)) to transmit a DL signal in the U-band.

(1) Type 1 DL CAP method

In a Type 1 DL CAP, the length of a time duration spanned by sensing slots that are sensed to be idle before transmission(s) is random. The Type 1 DL CAP may be applied to the following transmissions:

- transmission(s) initiated by the BS, including (i) a unicast PDSCH with user plane data, or (ii) a unicast PDSCH with user plane data and a unicast PDCCH scheduling the user plane data; or
- transmission(s) initiated by the BS, including (i) only a discovery burst, or (ii) a discovery burst multiplexed with non-unicast information.

Referring to FIG. 16, the BS may first sense whether a channel is idle for a sensing slot duration of a defer duration Td. Next, if a counter N is decremented to 0, transmission may be performed (S1634). The counter N is adjusted by sensing the channel for additional slot duration(s) according to the following procedures.

Step 1) Set N=Ninit where Ninit is a random number uniformly distributed between 0 and CWp, and go to step 4 (S1620).

Step 2) If N > 0 and the BS chooses to decrement the counter, set N=N-1 (S1640).

Step 3) Sense the channel for an additional slot duration, and if the additional slot duration is idle (Y), go to step 4. Else (N), go to step 5 (S1650).

Step 4) IfN=0 (Y), stop a CAP (S1630). Else (N), go to step 2 (S1630).

Step 5) Sense the channel until a busy sensing slot is detected within the additional defer duration Td or all slots of the additional defer duration Td are sensed to be idle (S1660).

Step 6) If the channel is sensed to be idle for all slot durations of the additional defer duration Td (Y), go to step 4. Else (N), go to step 5 (S1670).

Table 12 illustrates that mp, a minimum CW, a maximum CW, an MCOT, and an allowed CW size, which are applied to a CAP, vary according to channel access priority classes.

[Table 12]

| Channel Access Priority Class (p) | $m_p$ | CWmin ,p | CWmax, p | Tmcot,p | allowed CWp sizes |
|---|---|---|---|---|---|
| 1 | 1 | 3 | 7 | 2ms | {3,7} |
| 2 | 1 | 7 | 15 | 3 ms | {7,15} |
| 3 | 3 | 15 | 63 | 8 or 10 ms | {15,31,63} |

(continued)

| Channel Access Priority Class (p) | $m_p$ | CWmin ,p | CWmax, p | Tmcot,p | allowed CWp sizes |
|---|---|---|---|---|---|
| 4 | 7 | 15 | 1023 | 8 or 10 ms | {15,31,63,127,255,511,10 23} |

The defer duration Td includes a duration Tf (16 μs) immediately followed by mp consecutive sensing slot durations where each sensing slot duration Tsl is 9 μs, and Tf includes the sensing slot duration Tsl at the start of the 16-μs duration.

CWmin,p <= CWp <= CWmax,p. CWp is set to CWmin,p, and may be updated (CW size update) before Step 1 based on HARQ-ACK feedback (e.g., ratio of ACK signals or NACK signals) for a previous DL burst (e.g., PDSCH). For example, CWp may be initialized to CWmin,p based on HARQ-ACK feedback for the previous DL burst, may be increased to the next highest allowed value, or may be maintained at an existing value.

(2) Type 2 DL CAP method

In a Type 2 DL CAP, the length of a time duration spanned by sensing slots sensed to be idle before transmission(s) is deterministic. Type 2 DL CAPs are classified into Type 2A DL CAP, Type 2B DL CAP, and Type 2C DL CAP.

The Type 2A DL CAP may be applied to the following transmissions. In the Type 2A DL CAP, the BS may transmit a signal immediately after a channel is sensed to be idle during at least a sensing duration Tshort_dl = 25 μs. Tshort_dl includes a duration Tf (= 16 μs) and one immediately following sensing slot duration. Tf includes the sensing slot at the start of the duration.

- Transmission(s) initiated by the BS, including (i) only a discovery burst, or (ii) a discovery burst multiplexed with non-unicast information, or
- Transmission(s) of the BS after a gap of 25 μs from transmission(s) by the UE within shared channel occupancy.

The Type 2B DL CAP is applicable to transmission(s) performed by the BS after a gap of 16 μs from transmission(s) by the UE within shared channel occupancy. In the Type 2B DL CAP, the BS may transmit a signal immediately after a channel is sensed to be idle during Tf=16 μs. Tf includes a sensing slot within the last 9 μs of the duration. The Type 2C DL CAP is applicable to transmission(s) performed by the BS after a maximum of a gap of 16 μs from transmission(s) by the UE within shared channel occupancy. In the Type 2C DL CAP, the BS does not sense a channel before performing transmission.

In a wireless communication system supporting a U-band, one cell (or carrier (e.g., CC)) or BWP configured for the UE may consist of a wideband having a larger BW than in legacy LTE. However, a BW requiring CCA based on an independent LBT operation may be limited according to regulations. If a subband (SB) in which LBT is individually performed is defined as an LBT-SB, a plurality of LBT-SBs may be included in one wideband cell/BWP. A set of RBs constituting an LBT-SB may be configured by higher-layer (e.g., RRC) signaling. Accordingly, one or more LBT-SBs may be included in one cell/BWP based on (i) the BW of the cell/BWP and (ii) RB set allocation information.

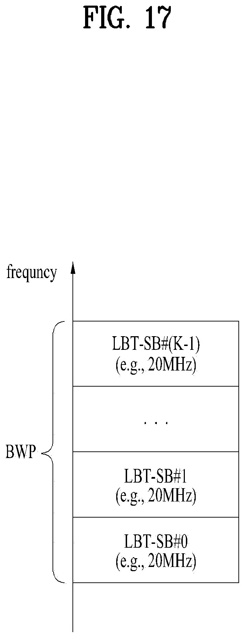

FIG. 17 illustrates that a plurality of LBT-SBs is included in a U-band.

Referring to FIG. 17, a plurality of LBT-SBs may be included in the BWP of a cell (or carrier). An LBT-SB may be, for example, a 20-MHz band. The LBT-SB may include a plurality of contiguous (P)RBs in the frequency domain and thus may be referred to as a (P)RB set. Although not illustrated, a guard band (GB) may be included between the LBT-SBs. Therefore, the BWP may be configured in the form of {LBT-SB #0 (RB set #0) + GB #0 + LBT-SB #1 (RB set #1 + GB #1) + ... + LBT-SB #(K-1) (RB set (#K-1))}. For convenience, LBT-SB/RB indexes may be configured/defined to be increased as a frequency band becomes higher starting from a low frequency band.

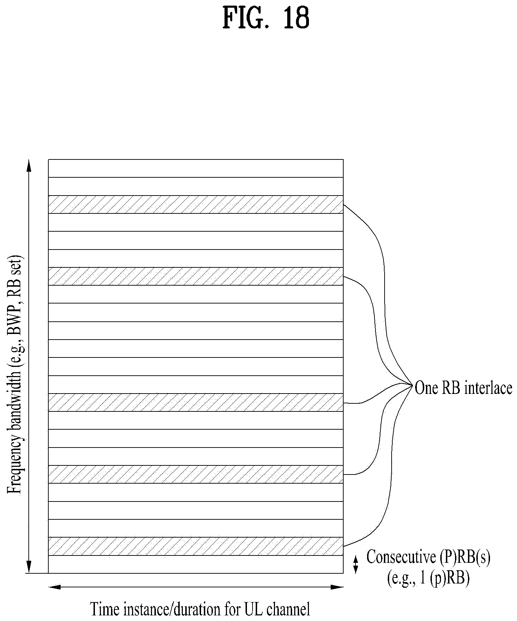

FIG. 18 illustrates an RB interlace. In a shared spectrum, a set of inconsecutive RBs (at the regular interval) (or a single RB) in the frequency domain may be defined as a resource unit used/allocated to transmit a UL (physical) channel/signal in consideration of regulations on occupied channel bandwidth (OCB) and power spectral density (PSD). For convenience, such a set of inconsecutive RBs is defined as "RB interlace" (simply, interlace).

Referring to FIG 18, a plurality of RB interlaces (simply, a plurality of interlaces) may be defined in a frequency bandwidth. Here, the frequency bandwidth may include a (wideband) cell/CC/BWP/RB set, and the RB may include a PRB. For example, interlace #m∈{0, 1, ..., M-1} may consist of (common) RBs {m, M+m, 2M+m, 3M+m, ...}, where M denotes the number of interlaces. A transmitter (e.g., UE) may use one or more interlaces to transmit a signal/channel. The signal/channel may include a PUCCH or PUSCH.

For UL resource allocation type 2, RB assignment information (e.g., frequency domain resource assignment in FIG. E5 may indicate to the UE up to M interlace indices (where M is a positive integer) and $N_{RB-set}^{BWP}$ consecutive RB sets (for DCI 0_1). In this case, the RB set corresponds to a frequency resource in which a channel access procedure (CAP) is performed in a shared spectrum, which consists of a plurality of contiguous (P)RBs. The UE may determine RB(s) corresponding to the intersection of indicated interlaces and indicated RB set(s) [including guard bands between the indicated RB set(s) (if present)] as a frequency resource for PUSCH transmission. In this case, guard bands between the consecutive RB set(s) may also be used as the frequency resource for PUSCH transmission. Therefore, the RB(s) corresponding to the intersection of (1) the indicated interlaces and (2) [the indicated RB set(s) + the guard band between the indicated RB set(s) (if present)] may be determined as the frequency resource for PUSCH transmission.

If u = 0, X MSBs (where X is a positive integer) MSBs of the RB assignment information indicate interlace index set (m0 + I) allocated to the UE, and the indication information is composed of a resource indication value (RIV). If $0 <= RIV < M(M+1)/2$, I = 0, 1 ,..., L-1. The RIV corresponds to (i) a starting interlace index, mo and (ii) the number L of consecutive interlace indices (L is a positive integer). The RIV may be defined as follows.

[Equation 1]

$$\text{if } (L - 1) \leq \lfloor M/2 \rfloor \text{ then}$$

$$RIV = M(L - 1) + m_0$$

else

$$RIV = M(M - L + 1) + (M - 1 - m_0)$$

In Equation 1, M denotes the number of interlaces, mo denotes the starting interlace index, L denotes the number of consecutive interlaces, and $\lfloor \cdot \rfloor$ denotes the flooring function.

If RIV >= M(M+1)/2, the RIV corresponds to (i) the start interlace index, mo and (ii) a set of I values as shown in Table 13.

[Table 13]

| RIV - M(M + 1)/2 | $m_0$ | I |
|---|---|---|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |
| 5 | 2 | {0, 1, 2, 5, 6, 7} |
| 6 | 3 | {0, 5} |
| 7 | 4 | {0, 5} |

If u=1, X MSBs (where X is a positive integer) of the RB assignment information (i.e., frequency domain resource assignment) includes a bitmap indicating interlaces allocated to the UE. The size of the bitmap is M bits, and each bit corresponds to each interlace. For example, interlaces #0 to #(M-1) may be one-to-one mapped from the MSB to the LSB of the bitmap, respectively. If a bit value of the bitmap is 1, a corresponding interlace is allocated to the UE. Otherwise, the corresponding interlace is not allocated to the UE. If u = 0 and u = 1, $Y = \left\lceil log2 \frac{N_{RB-set}^{BWP}(N_{RB-set}^{BWP}+1)}{2} \right\rceil$ LSBs of the RB assignment information may indicate RB set (s) continuously allocated to the UE for the PUSCH. Here, $N_{RB-set}^{BWP}$ denotes the number of RB sets configured in a BWP, and $\lceil \cdot \rceil$ denotes the ceiling function. The PUSCH may be scheduled by DCI format 0_1, a Type 1 configured grant, and a Type 2 configured grant. The resource allocation information may be composed of the RIV (hereinafter referred to as $RIV_{RBset}$). If $0 <= RIV_{RBset} < N_{RB-set}^{BWP}(N_{RB-set}^{BWP}+1)/2$, I = 0, 1, ..., L RBset-1. The RIV corresponds to (i) a starting RB set ($RB_{setSTART}$) and (ii) the number of consecutive RB set(s) ($L_{RBset}$) (where $L_{RBset}$ is a positive integer). The RIV may be defined as follows.

[Equation 2]

$$if\ (L_{RBset} - 1) \leq \lfloor N_{RB-set}^{BWP}/2 \rfloor\ then$$

$$RIV_{RBset} = N_{RB-set}^{BWP}(L_{RBset} - 1) + RBset_{START}$$

$$else$$

$$RIV_{RBset} = N_{RB-set}^{BWP}(N_{RB-set}^{BWP} - L_{RBset} + 1) + (N_{RB-set}^{BWP} - 1 - RBset_{START})$$

In Equation 2, $L_{RBset}$ denotes the number of consecutive RB set(s), $N^{BWP}_{RB\text{-}set}$ denotes the number of RB sets configured in a BWP, $RB_{setSTART}$ denotes the index of a starting RB set, and $\lfloor \cdot \rfloor$ denotes the flooring function.

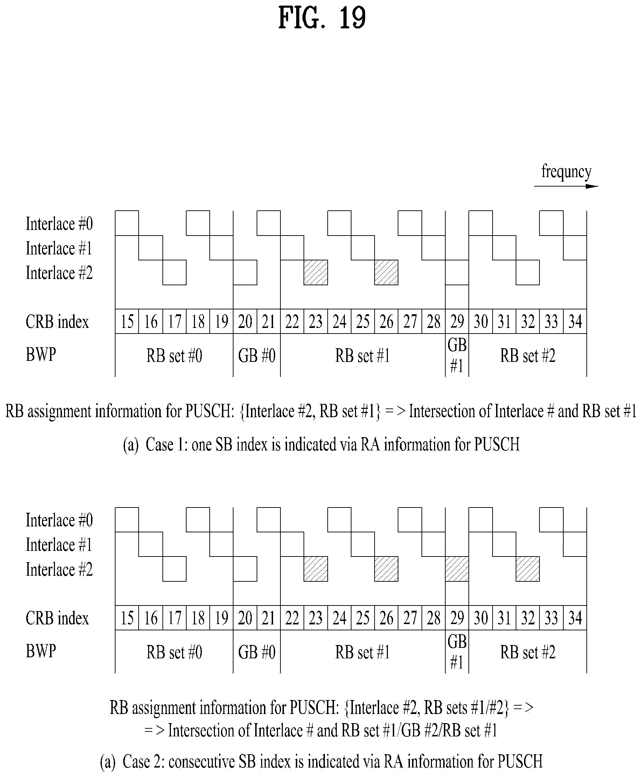

FIG. 19 illustrates resource assignment for UL transmission in a shared spectrum.

Referring to FIG. 19(a), RBs belonging to interlace #1 in RB set #1 may be determined as a PUSCH resource based on resource assignment information for a PUSCH indicating {interlace #1, RB set #1}. That is, RBs corresponding to the intersection of {interlace #1, RB set #1} may be determined as the PUSCH resource. Referring to FIG. 19(b), RBs belonging to interlace #2 in RB sets #1 and #2 may be determined as the PUSCH resource based on the resource assignment information for the PUSCH indicating {interlace #2, RB sets #1 and #2}. In this case, a guide band (GB) (i.e., GB #1) between RB set #1 and RB set #2 may also be used as the PUSCH transmission resource. That is, RBs corresponding to the intersection of {interlace #1, RB sets #1 and #2, GB #1} may be determined as the PUSCH resource. In this case, a GB (i.e., GB #0) which is not between RB set #1 and RB set #2 is not used as the PUSCH transmission resource even if the GB is adjacent to RB sets #1 and #2.

In the NR system, a massive multiple input multiple output (MIMO) environment in which the number of transmission/reception (Tx/Rx) antennas is significantly increased may be under consideration. That is, as the massive MIMO environment is considered, the number of Tx/Rx antennas may be increased to a few tens or hundreds. The NR system supports communication in an above 6 GHz band, that is, a millimeter frequency band. However, the millimeter frequency band is characterized by the frequency property that a signal is very rapidly attenuated according to a distance due to the use of too high a frequency band. Therefore, in an NR system operating at or above 6 GHz, beamforming (BF) is considered, in which a signal is transmitted with concentrated energy in a specific direction, not omnidirectionally, to compensate for rapid propagation attenuation. Accordingly, there is a need for hybrid BF with analog BF and digital BF in combination according to a position to which a BF weight vector/precoding vector is applied, for the purpose of increased performance, flexible resource allocation, and easiness of frequency-wise beam control in the massive MIMO environment

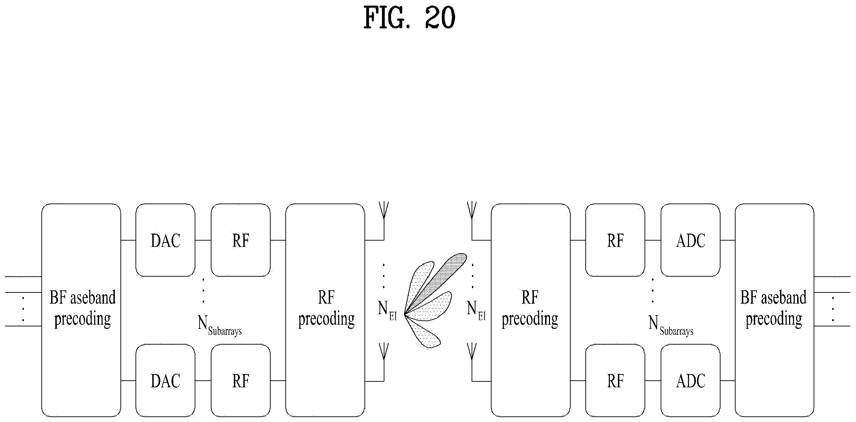

FIG. 20 is a block diagram illustrating an exemplary transmitter and receiver for hybrid BF.

To form a narrow beam in the millimeter frequency band, a BF method is mainly considered, in which a BS or a UE transmits the same signal through multiple antennas by applying appropriate phase differences to the antennas and thus increasing energy only in a specific direction. Such BF methods include digital BF for generating a phase difference for digital baseband signals, analog BF for generating phase differences by using time delays (i.e., cyclic shifts) for modulated analog signals, and hybrid BF with digital BF and analog beamforming in combination. Use of a radio frequency (RF) unit (or transceiver unit (TXRU)) for antenna element to control transmission power and phase control on antenna element basis enables independent BF for each frequency resource. However, installing TXRUs in all of about 100 antenna elements is less feasible in terms of cost. That is, a large number of antennas are required to compensate for rapid propagation attenuation in the millimeter frequency, and digital BF needs as many RF components (e.g., digital-to-analog converters (DACs), mixers, power amplifiers, and linear amplifiers) as the number of antennas. As a consequence, implementation of digital BF in the millimeter frequency band increases the prices of communication devices. Therefore, analog BF or hybrid BF is considered, when a large number of antennas are needed as is the case with the millimeter frequency band. In analog BF, a plurality of antenna elements are mapped to a single TXRU and a beam direction is controlled by an analog phase shifter. Because only one beam direction is generated across a total band in analog BF, frequency-selective BF may not be achieved with analog BF. Hybrid BF is an intermediate form of digital BF and analog BF, using B RF units fewer than Q antenna elements. In hybrid BF, the number of beam directions available for simultaneous transmission is limited to B or less, which depends on how B RF units and Q antenna elements are connected.

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). ADL RS ID may be an SSB resource indicator (SSBRI) or a CSI-RS resource indicator (CRI).

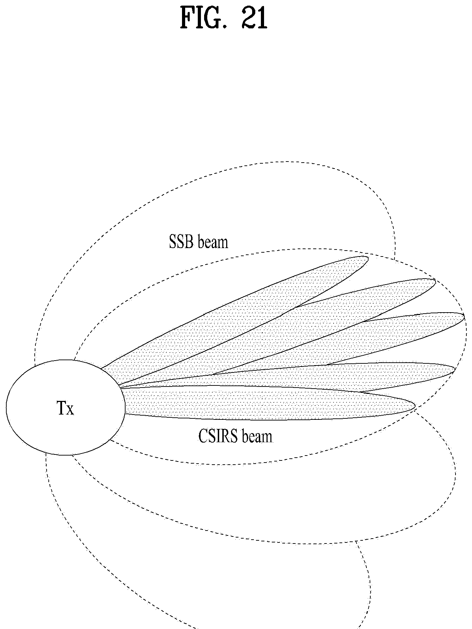

FIG. 21 is a diagram illustrating exemplary BF using an SSB and a CSI-RS.

Referring to FIG. 21, an SSB beam and a CSI-RS beam may be used for beam measurement. A measurement metric is the RSRP of each resource/block. The SSB may be used for coarse beam measurement, whereas the CSI-RS may be used for fine beam measurement. The SSB may be used for both Tx beam sweeping and Rx beam sweeping. SSB-based Rx beam sweeping may be performed by attempting to receive the SSB for the same SSBRI, while changing an Rx beam across multiple SSB bursts at a UE. One SS burst includes one or more SSBs, and one SS burst set includes one or more SSB bursts.

1. DL BM Using SSB

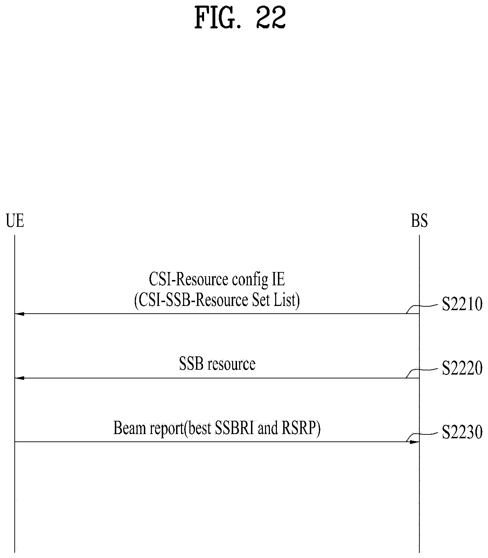

FIG. 22 is a diagram illustrating a signal flow for an exemplary DL BM procedure using an SSB.

An SSB-based beam report is configured during CSI/beam configuration in RRC_CONNECTED mode.

- A UE receives a CSI-ResourceConfig information element (IE) including CSI-SSB-ResourceSetList for SSB resources used for BM from a BS (S2210). The RRC parameter, CSI-SSB-ResourceSetList is a list of SSB resources used for BM and reporting in one resource set. The SSB resource set may be configured as {SSBx1, SSBx2, SSBx3, SSBx4}. SSB indexes may range from 0 to 63.
- The UE receives signals in the SSB resources from the BS based on CSI-SSB-ResourceSetList (S2220).
- When CSI-RS reportConfig related to an SSBRI and RSRP reporting has been configured, the UE reports a best SSBRI and an RSRP corresponding to the best SSBRI to the BS (S2230). For example, when reportQuantity in the CSI-RS reportConfig IE is set to 'ssb-Index-RSRP', the UE reports the best SSBRI and the RSRP corresponding to the best SSBRI to the BS.

When CSI-RS resources are configured in OFDM symbol(s) carrying an SSB and 'QCL-TypeD' is applicable to the CSI-RS resources and the SSB, the UE may assume that a CSI-RS and the SSB are quasi-co-located (QCLed) from the perspective of 'QCL-TypeD'. QCL-TypeD may mean that antenna ports are QCLed from the perspective of spatial Rx parameters. When the UE receives signals from a plurality of DL antenna ports placed in the QCL-TypeD relationship, the UE may apply the same Rx beam to the signals

2. DL BM Using CSI-RS

The CSI-RS serves the following purposes: i) when Repetition is configured and TRS_info is not configured for a specific CSI-RS resource set, the CSI-RS is used for BM; ii) when Repetition is not configured and TRS_info is configured for the specific CSI-RS resource set, the CSI-RS is used for a tracking reference signal (TRS); and iii) when either of Repetition or TRS_info is configured for the specific CSI-RS resource set, the CSI-RS is used for CSI acquisition.

When (the RRC parameter) Repetition is set to 'ON', this is related to the Rx beam sweeping process of the UE. In the case where Repetition is set to 'ON', when the UE is configured with NZP-CSI-RS-ResourceSet, the UE may assume that signals in at least one CSI-RS resource within NZP-CSI-RS-ResourceSet are transmitted through the same DL spatial domain filter. That is, the at least one CSI-RS resource within NZP-CSI-RS-ResourceSet is transmitted on the same Tx beam. The signals in the at least one CSI-RS resource within NZP-CSI-RS-ResourceSet may be transmitted in different OFDM symbols.

On the contrary, when Repetition is set to 'OFF', this is related to the Tx beam sweeping process of the BS. In the case where Repetition is set to 'OFF', the UE does not assume that signals in at least one CSI-RS resource within NZP-CSI-RS-ResourceSet are transmitted through the same DL spatial domain filter. That is, the signals in the at least one CSI-RS resource within NZP-CSI-RS-ResourceSet are transmitted on different Tx beams. FIG. 12 illustrates another exemplary DL BM procedure using a CSI-RS.

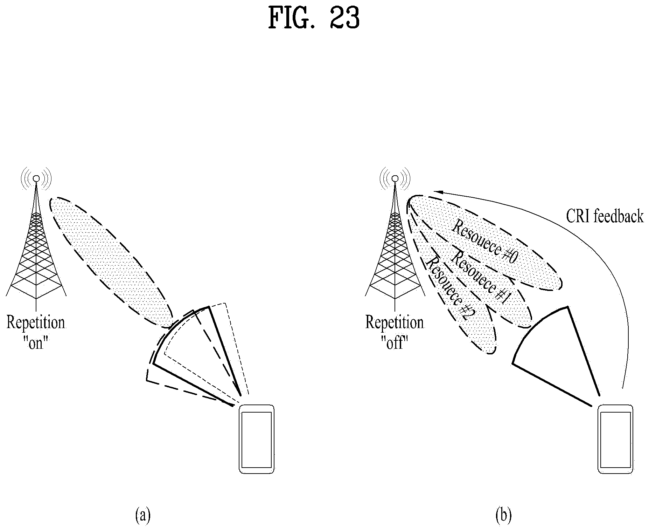

FIG. 23(a) illustrates an Rx beam refinement process of a UE, and FIG. 16(b) illustrates a Tx beam sweeping process of a BS. Further, FIG. 23(a) is for a case in which Repetition is set to 'ON', and FIG. 23(b) is for a case in which Repetition is set to 'OFF'.

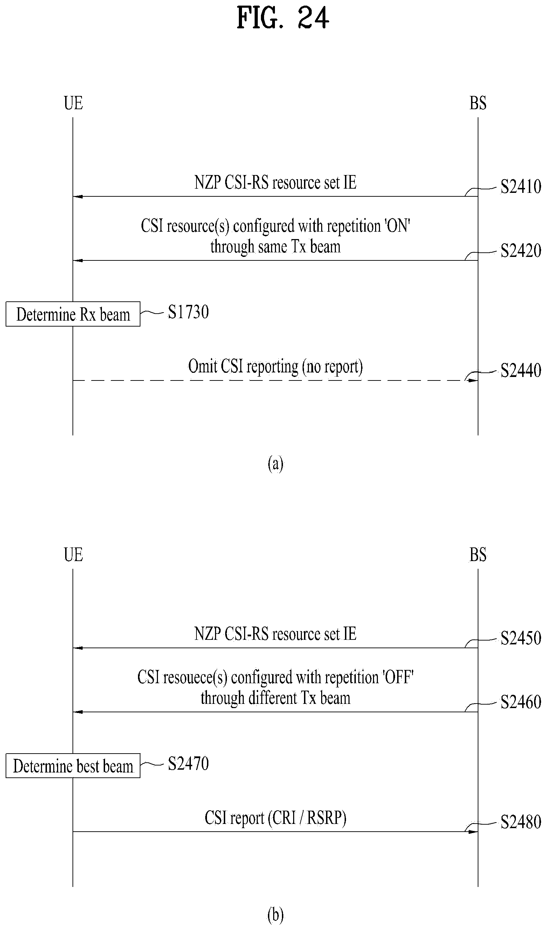

With reference to FIGS. 23(a) and 24(a), an Rx beam determination process of a UE will be described below.

FIG. 24(a) is a diagram illustrating a signal flow for an exemplary Rx beam determination process of a UE.

- The UE receives an NZP CSI-RS resource set IE including an RRC parameter 'Repetition' from a BS by RRC signaling (S2410). The RRC parameter 'Repetition' is set to 'ON' herein.
- The UE repeatedly receives signals in resource(s) of a CSI-RS resource set for which the RRC parameter 'Repetition' is set to 'ON' on the same Tx beam (or DL spatial domain Tx filter) of the BS in different OFDM symbols (S2420).
- The UE determines its Rx beam (S2430).
- The UE skips CSI reporting (S2440). That is, the UE may skip CSI reporting, when the RRC parameter 'Repetition' is set to 'ON'.

With reference to FIGS. 23(b) and 24(b), a Tx beam determination process of a BS will be described below.

FIG. 23(b) is a diagram illustrating an exemplary Tx beam determination process of a BS.

- A UE receives an NZP CSI-RS resource set IE including an RRC parameter 'Repetition' from the BS by RRC signaling (S2350). When the RRC parameter 'Repetition' is set to 'OFF', this is related to a Tx beam sweeping process of the BS.
- The UE receives signals in resource(s) of a CSI-RS resource set for which the RRC parameter 'Repetition' is set to 'OFF' on different Tx beams (or DL spatial domain Tx filters) of the BS (S2360).
- The UE selects (or determines) a best beam (S2370).
- The UE reports the ID (e.g., CRI) of the selected beam and related quality information (e.g., an RSRP) to the BS (S2380). That is, the UE reports a CRI and an RSRP corresponding to the CRI, when a CSI-RS is transmitted for BM.

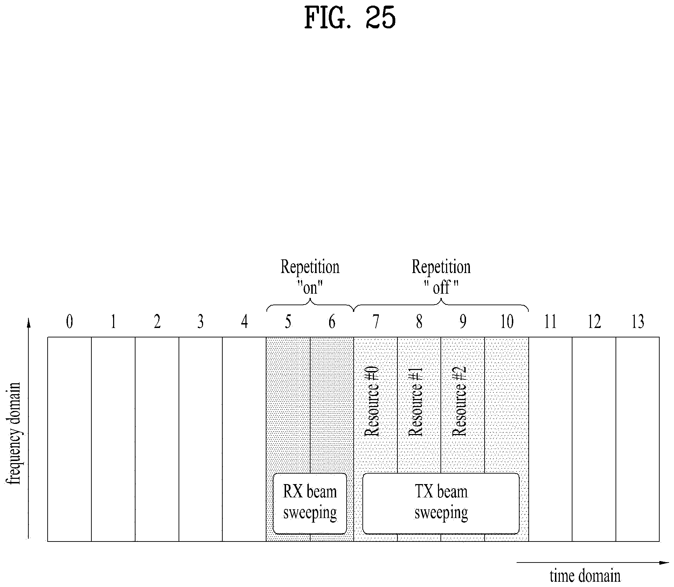

FIG. 25 is a diagram illustrating exemplary resource allocation in the time and frequency domains, which is related to the operation of FIG. 23.

When Repetition is set to 'ON' for a CSI-RS resource set, a plurality of CSI-RS resources may be repeatedly used on the same Tx beam, whereas when Repetition is set to 'OFF' for the CSI-RS resource set, different CSI-RS resources may be repeatedly transmitted on different Tx beams.

### 3. DL BM-Related Beam Indication

The UE may receive at least a list of up to M candidate transmission configuration indication (TCI) states for QCL indication by RRC signaling. M depends on a UE capability and may be 64.

Each TCI state may be configured with one RS set. Table 14 describes an example of a TCI-State IE. The TC-State IE is related to a QCL type corresponding to one or two DL RSs.

In Table 14, 'bwp-Id' identifies a DL BWP in which an RS is located, 'cell' indicates a carrier in which the RS is located, and 'referencesignal' indicates reference antenna port(s) serving as a QCL source for target antenna port(s) or an RS including the reference antenna port(s). The target antenna port(s) may be for a CSI-RS, PDCCH DMRS, or PDSCH DMRS.

### 4. Quasi-Co Location (OCL)

The UE may receive a list of up to M TCI-State configurations to decode a PDSCH according to a detected PDCCH carrying DCI intended for a given cell. M depends on a UE capability.

As described in Table 14, each TCI-State includes a parameter for establishing the QCL relationship between one or more DL RSs and a PDSCH DM-RS port. The QCL relationship is established with an RRC parameter qcl- Type 1 for a first DL RS and an RRC parameter qcl-Type2 for a second DL RS (if configured).

The QCL type of each DL RS is given by a parameter 'qcl-Type' included in QCL-Info and may have one of the following values.

- 'QCL-TypeA': {Doppler shift, Doppler spread, average delay, delay spread}
- 'QCL-TypeB': {Doppler shift, Doppler spread}

[Table 14]

```
-- ASN1START
-- TAG-TCI-STATE-START

TCI State ::            SEQUENCE {
        tci-StateId             TCI-StateId,
        qcl-Type1               QCL-Info,
        qcl-Type2               QCL-Info
        ...
}

QCL-Info ::            SEQUENCE {
        cell                    ServCellIndex
        bwp-id                  BWP-id
        referenceSignal         CHOICE {
          csi-rs                  NZP-CSI-RS-ResourceId,
          ssb                     SSB-Index
        },
        qcl-Type                ENUMERATED {typeA, typeB, typeC,
typeD},
        ...
}

        TAG-TCI-STATE-STOP
-- ASN1STOP
```

- 'QCL-TypeC': {Doppler shift, average delay}
- 'QCL-TypeD': {Spatial Rx parameter}

For example, if a target antenna port is for a specific NZP CSI-RS, the NZP CSI-RS antenna port may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

UL BM Procedure

In UL BM, beam reciprocity (or beam correspondence) between Tx and Rx beams may or may not be established according to the implementation of the UE. If the Tx-Rx beam reciprocity is established at both the BS and UE, a UL beam pair may be obtained from a DL beam pair. However, if the Tx-Rx beam reciprocity is established at neither the BS nor UE, a process for determining a UL beam may be required separately from determination of a DL beam pair.

In addition, even when both the BS and UE maintain the beam correspondence, the BS may apply the UL BM procedure to determine a DL Tx beam without requesting the UE to report its preferred beam.

The UL BM may be performed based on beamformed UL SRS transmission. Whether the UL BM is performed on a set of SRS resources may be determined by a usage parameter (RRC parameter). If the usage is determined as BM, only one SRS resource may be transmitted for each of a plurality of SRS resource sets at a given time instant.

The UE may be configured with one or more SRS resource sets (through RRC signaling), where the one or more SRS resource sets are configured by SRS-ResourceSet (RRC parameter). For each SRS resource set, the UE may be configured with K≥1 SRS resources, where K is a natural number, and the maximum value of K is indicated by SRS_capability.

The UL BM procedure may also be divided into Tx beam sweeping at the UE and Rx beam sweeping at the BS similarly to DL BM.

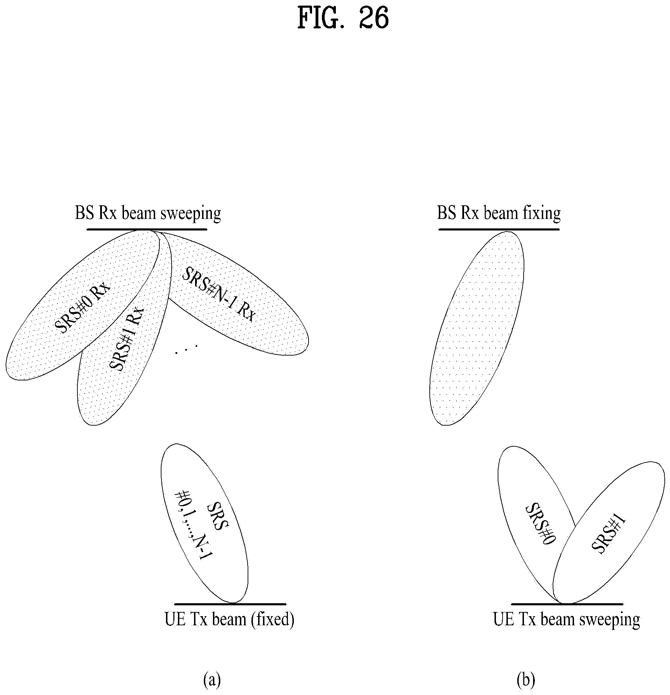

FIG. 26 illustrates an example of a UL BM procedure based on an SRS.

FIG. 26(a) shows a process in which the BS determines Rx beamforming, and FIG. 26(b) shows a process in which the UE performs Tx beam sweeping.

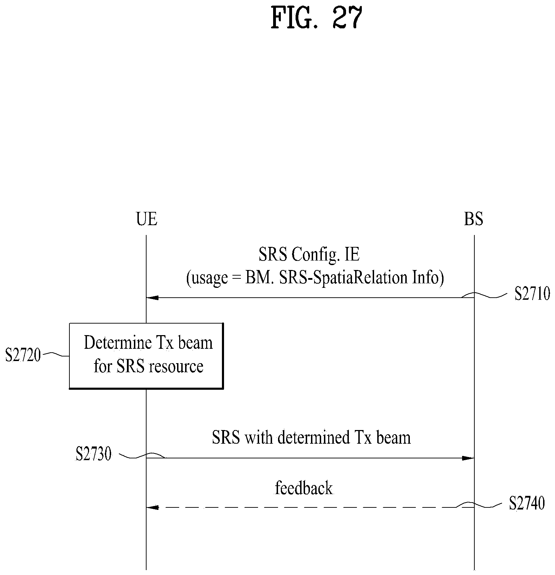

FIG. 27 is a flowchart illustrating an example of a UL BM procedure based on an SRS.

- The UE receives RRC signaling (e.g., SRS-Config IE) including a usage parameter (RRC parameter) set to BM from the BS (S2710). The SRS-Config IE is used to configure SRS transmission. The SRS-Config IE includes a list of SRS resources and a list of SRS resource sets. Each SRS resource set refers to a set of SRS resources.
- The UE determines Tx beamforming for SRS resources to be transmitted based on SRS-SpatialRelation Info included in the SRS-Config IE (S2720). Here, the SRS-SpatialRelation Info is configured for each SRS resource and indicates whether the same beamforming as that used for an SSB, a CSI-RS, or an SRS is applied for each SRS resource.
- If SRS-SpatialRelationInfo is configured for the SRS resources, the same beamforming as that used in the SSB, CSI-RS, or SRS is applied and transmitted. However, if SRS-SpatialRelationInfo is not configured for the SRS resources, the UE randomly determines the Tx beamforming and transmits an SRS based on the determined Tx beamforming (S2730).

For a P-SRS in which 'SRS-ResourceConfigType' is set to 'periodic':

i) If SRS-SpatialRelationInfo is set to 'SSB/PBCH', the UE transmits the corresponding SRS by applying the same spatial domain transmission filter as a spatial domain reception filter used for receiving the SSB/PBCH (or a spatial domain transmission filter generated from the spatial domain reception filter);
ii) If SRS-SpatialRelationInfo is set to 'CSI-RS', the UE transmits the SRS by applying the same spatial domain transmission filter as that used for receiving the CSI-RS; or
iii) If SRS-SpatialRelationInfo is set to 'SRS', the UE transmits the corresponding SRS by applying the same spatial domain transmission filter as that used for transmitting the SRS.

- Additionally, the UE may or may not receive feedback on the SRS from the BS as in the following three cases (S2740).

i) When Spatial_Relation_Info is configured for all SRS resources in an SRS resource set, the UE transmits the SRS on a beam indicated by the BS. For example, if Spatial_Relation_Info indicates the same SSB, CRI, or SRI, the UE repeatedly transmits the SRS on the same beam.
ii) Spatial_Relation_Info may not be configured for all SRS resources in the SRS resource set. In this case, the UE may transmit while changing the SRS beamforming randomly.
iii) Spatial_Relation_Info may be configured only for some SRS resources in the SRS resource set. In this case, the UE may transmit the SRS on an indicated beam for the configured SRS resources, but for SRS resources in which Spatial_Relation_Info is not configured, the UE may perform transmission by applying random Tx beamforming.

Before a description of proposed methods, NR-based channel access schemes for an unlicensed band used in the present disclosure are classified as follows.

- Category 1 (Cat-1): the next transmission immediately follows the previous transmission after a switching gap within a COT, and the switching gap is shorter than 16 us, including even a transceiver turn-around time. Cat-1 LBT may correspond to the above-described Type 2C CAP.
- Category 2 (Cat-2): an LBT method without backoff. Once a channel is confirmed to be idle during a specific time period shortly before transmission, the transmission may be performed immediately. Cat-2 LBT may be subdivided according to the length of a minimum sensing duration required for channel sensing immediately before a transmission. For example, Cat-2 LBT with a minimum sensing duration of 25 us may correspond to the above-described Type 2A CAP, and Cat-2 LBT with a minimum sensing duration of 16 us may correspond to the above-described Type 2B CAP. The minimum sensing durations are merely exemplary, and a minimum sensing duration less than 25 us or 16 us (e.g., a minimum sensing duration of 9 us) may also be available.
- Category 3 (Cat-3): an LBT method with fixed contention window size (CWS)i-based backoff. A transmitting entity selects a random number N in a range of 0 to a (fixed) maximum CWS value and decrements a counter value each time it determines that a channel is idle. When the counter value reaches 0, the transmitting entity is allowed to perform a transmission.
- Category 4 (Cat-4): an LBT method with variable CWS-based backoff. A transmitting entity selects a random number N in a range of 0 to a (variable) maximum CWS value and decrements a counter value, each time it determines that a channel is idle. When the counter value reaches 0, the transmitting entity is allowed to perform a transmission. If the transmitting entity receives a feedback indicating reception failure of the transmission, the transmitting entity increases the maximum CWS value by one level, selects a random number again within the increased CWS value, and performs an LBT procedure. Cat-4 LBT may correspond to the above-described Type 1 CAP.

In an unlicensed band, all devices may need to implement a mechanism such as an LBT for transmission and perform a channel access procedure according to regulations by country or region. Alternatively, in countries or regions where the LBT is not necessarily defined, signal transmission may be possible without the LBT.

At this time, since a direction and type of the LBT are various, it is necessary to indicate/configure a direction and type of the LBT to be used by a UE or a BS to perform the channel access procedure.

For example, types of a directional LBT include an omnidirectional LBT (O-LBT) performed in all directions and a directional LBT (D-LBT) performed only in a specific beam direction.

In addition, like the CAP type described for the channel access process, there may be various LBT types including Random Back-off based Type 1 LBT, Cat-2 series Type 2A/2B to be used only in a COT acquired through the Type 1 LBT by the BS or the UE, and Type 2C LBT (i.e., no LBT) to be used when a gap between transmissions satisfies a specific length. The Random Back-off based Type 1 LBT may mean Random Back-off based Cat-3 LBT or Random Back-off based Cat-4 LBT.

Therefore, the present disclosure proposes a method for instructing a BS or a UE to perform a direction and type of an LBT.

In the case of NR-U operating in a band equal to or less than 7 GHz, since only O-LBT, in which an LBT is always performed in all directions, is performed, only one of Type 1/2A/2B/2C of the LBT needs to be specified when scheduling UL channels/signals through UL grant to the UE. In addition, COT initiating is not possible with other LBT types other than the Random Back-off based LBT (e.g., Cat-3 or Cat-4) such as Type 1 LBT.

However, in a band equal to or greater than 52 GHz, both a mode in which a COT is initiated through the Random Back-off based LBT (e.g., Cat-3 or Cat-4) such as Type 1 LBT according to the regulations of a specific country or region and a mode in which a COT is initiated without performing LBT may be supported.

In addition, in order to overcome path loss, directional transmission and/or D-LBT in which energy is concentrated and transmitted in a specific beam instead of all directions based on analog beamforming technology using multiple antennas.

Therefore, a method for indicating/configuring a direction and/or a type of the LBT to be performed by the UE or the BS may be required. Alternatively, the direction or type of the LBT may be implicitly determined based on a beam. In addition, after UL transmission in a COT acquired by performing the Random Back-off-based LBT (e.g., Cat-3 or Cat-4) such as Type 1 LBT for CG-PUSCH (Configured Grant - Physical Uplink Shared Channel) transmission, when the UE transfers the remaining COT to the BS and uses the same for DL transmission, as indicated COT sharing information through CG-UCI (Configured Grant-Uplink Control Information) in NR-U, the UE may indicate a beam direction and type of the LBT to be performed, to the BS. In addition, in the RACH (Random Access Channel) process, the LBT direction and type may be pre-configured according to each RO (RACH Occasion), each preamble, and/or whether the LBT is based on contention.

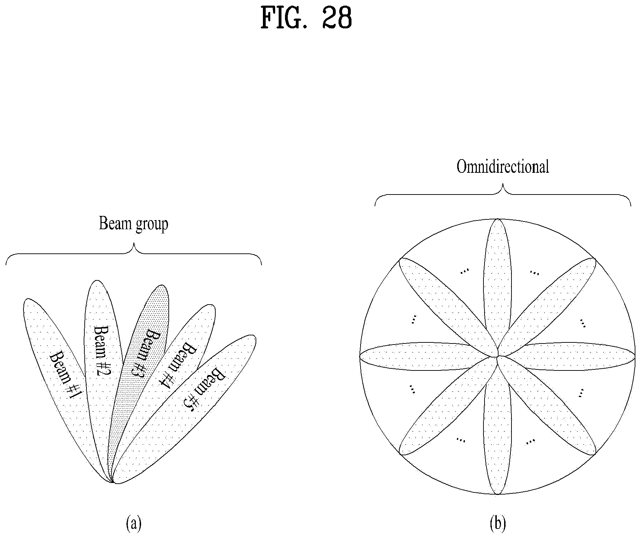

FIG. 28 shows an example of a directional LBT and an omnidirectional LBT.

FIG. 28(a) shows a directional LBT including a specific beam direction LBT and/or a beam group unit LBT, and FIG. 28 (b) shows an omnidirectional LBT.

Referring to FIG. 28(a), when a beam group includes beams #1 to #5, performing an LBT based on beams #1 to #5 may be referred to as beam group unit LBT. In addition, performing an LBT through any one of beams #1 to #5 (e.g., beam #3) may be referred to as a specific beam direction LBT. In this case, beams #1 to #5 may be continuous (or adjacent) beams, but may also be discontinuous (or non-adjacent) beams. In addition, the number of beams included in the beam group need not necessarily be plural, and a single beam may form one beam group.

FIG. 28(b) shows an omnidirectional LBT and shows an example in which an omnidirectional LBT is performed when an LBT is performed in units of a corresponding beam group by configuring one beam group by omnidirectional beams. In other words, if beams in all directions, that is, omnidirectional beams, which are a set of beams covering a specific sector in a cell, are included in one beam group, this may mean an omnidirectional LBT.

A frame based equipment (FBE) refers to a device that operates with a structure of transmission and reception at a periodic time having a periodicity such as a fixed frame period (FFP). FBEs may need to implement a listen before talk (LBT)-based channel access mechanism in order to perform channel access on an unlicensed operating channel. The LBT means a mechanism that performs clear channel assessment (CCA) before accessing a channel and is performed in a single observation slot.

Here, the observation slot is a time for checking whether transmission of another RLAN (radio local area network) exists on an operating channel, and is at least Z us or longer (e.g., 9 us or longer). In this case, the Z value may vary according to national regulations defined in the corresponding band. Also, the observation slot may be used in the same meaning as a sensing slot. That is, the length of the observation slot may have the same meaning as the sensing slot duration. A device initiating one or more transmissions is called an initiating device, and a device that responds based on transmission of the initiating device is called a responding device. The FBE may be an initiating device and/or a responding device.

When the UE or BS can perform transmission and LBT only in a specific direction rather than omnidirectional through analog beamforming, etc., perform LBT only in a specific beam direction and, upon success, transmission can be performed only in the corresponding direction. In addition, a channel access mechanism for transmitting without performing LBT may be allowed according to the regulation of the corresponding region and band.

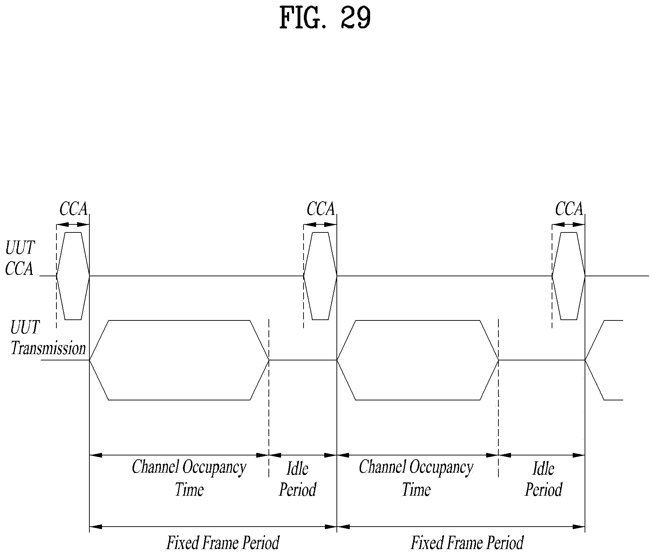

FIG. 29 shows a structure in which an FFP configured with a channel occupancy time (COT) of a predetermined period and an FFP configured with an idle period are periodically repeated as an example of timing for the FBE. A CCA may be performed in the observation slot within the idle period, and as a result of performing the CCA in the observation slot in the idle period of the #N$^{th}$ FFP, if there is no other RLAN transmission on the corresponding operating channel, that is, if an energy value measured in the observation slot is less than a CCA threshold, transmission may start at the COT in the #(N+1)th FFP. Supported FFP values may be declared by a manufacturer of the device. For example, FFP values may range from 1 ms to 10 ms.

According to regulations to be followed in each country, the device may perform the FFP only once in a specific period P (e.g., 200 ms). The length of the COT (channel occupancy time) in the FFP may not exceed X% (e.g., 95%) of the FFP length, and the idle period may be configured to be at least M us (e.g., 100 us), at least Y% (e.g., 5%) or more of the COT length. P, X, M, and Y may be defined as different values according to regulations.

If initiating transmission without performing a beam-based directional LBT or an LBT is allowed, the CCA process may mean a directional LBT in a specific beam direction. In addition, when no LBT, which performs transmission without performing an LBT, is used as a channel access mechanism, the initiating device may initiate immediate transmission at a boundary of the FFP (e.g., a COT start time) without an LBT.

The LBT and CCA refer to Cat-2 LBT that briefly checks a channel occupancy status for a certain period of time, and in the case of Cat-1 LBT, this means transmission without checking the channel occupancy status when a gap between transmissions when sharing the COT is a specific length. Here, Cat-2 LBT may be performed in Aus (e.g., 25 us) immediately before start of a next FFP in the idle period in a previous FFP. In addition, Cat-2 LBT may be applied when a gap between transmissions such as DL-to-DL, UL-to-DL, DL-to-UL, and UL-to-DL is Aus (e.g., 25 us) or B us (e.g., 16 us).

In addition, Cat-1 LBT may be applied when the above-described gap between transmissions is B us, and a signal/channel transmitted after Cat-1 LBT may have a transmission length limitation.

In addition, the aforementioned A and B may be defined differently according to the operating frequency band regulation of the corresponding country.

Now, prior to describing the proposed methods according to the present disclosure, overall operation processes of a UE and a BS implementing the proposed methods of the present disclosure will be described.

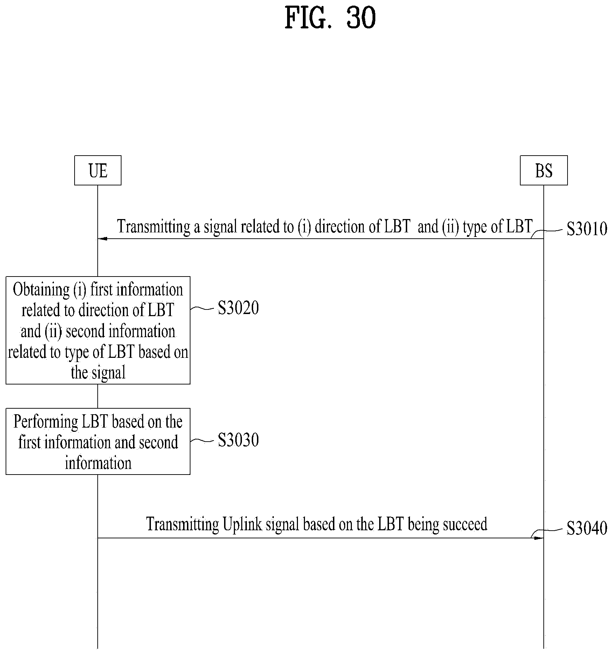

FIG. 30 relates to a method of transmitting an uplink signal by performing an LBT by a UE based on [Proposed Method #1] to [Proposed Method #3].

Referring to FIG. 30, the BS may transmit a signal related to a direction and type of an LBT to be performed by the UE (S3010). The UE may obtain first information related to the direction of the LBT and second information related to the type of the LBT based on the received signal (S3020). Here, a specific method for acquiring the first information and the second information based on the signal transmitted from the BS to the UE and the signal received by the UE may follow [Proposed Method #1] to [Proposed Method #3].

The UE may perform an LBT based on the first information and the second information (S3030) and transmit an uplink signal to the BS based on the successful LBT (S3040).

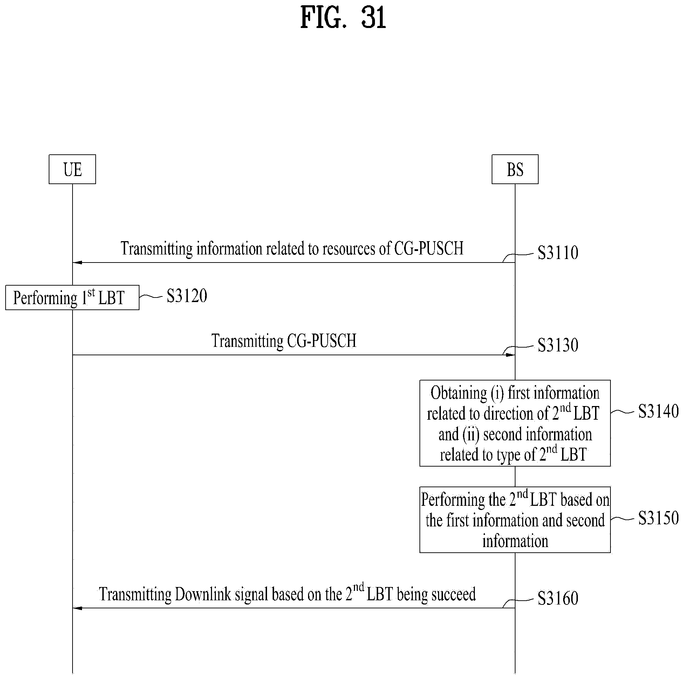

FIG. 31 is a diagram for explaining an operation process of a UE and a BS based on [Proposed Method #4].

Referring to FIG. 31, the BS may transmit information for configuring CG-PUSCH resources to the UE (S3110). The UE performs a first LBT for CG-PUSCH transmission (S3120). In addition, the UE may transmit the CG-PUSCH in the COT obtained by success of the first LBT based on success of the first LBT (S3130).

The BS may obtain the first information related to a direction of the second LBT to be performed by the BS and the second information related to the type of the second LBT based on [Proposed Method # 4] (S3140). The BS may perform the second LBT based on the first information and the second information (S3150). In addition, the BS may transmit a downlink signal to the UE based on success of the second LBT (S3160).

In the Proposed Methods described below, the D-LBT means performing an LBT based on a specific beam in a spatial and/or direction corresponding to a corresponding beam. That is, the D-LBT may mean a directional LBT that performs an LBT in a specific space and/or in a specific direction. In other words, in the Proposed Methods described below, a direction may mean a space.

On the other hand, the O-LBT is a non-directional LBT that is not based on a specific beam, and thus regardless of a specific space and/or direction, the O-LBT may mean performing an LBT in an entire space and/or all directions of a specific sector covered by a cell or a UE.

Now, based on FIG. 30, [Proposed Method #1] to [Proposed Method #3] will be described. In [Proposed Method #1] to [Proposed Method #3] below, LBT Type 1 may correspond to Random Back-off based Cat-3 LBT or Random Back-off based Cat-4 LBT, and Type 2A /2B may correspond to Cat-2 LBT, which is not based on Random Back-off. In addition, Type 2C may correspond to Cat-1 LBT that does not perform an LBT.

[Proposed Method #1]

A method of configuring/indicating a direction and type of an LBT, to be performed by a UE, by a BS when a UL signal/channel is scheduled to the UE will be described.

1. Embodiment #1-1

For a direction of an LBT, the BS may preconfigure one of a D-LBT and an O-LBT to the UE semi-statically through a higher layer signal such as RRC, and a type of the LBT (e.g., Type 1/2A/2B/2C ) may be dynamically instructed to the UE through a physical layer signal such as DCI.
(1) The BS may inform the UE whether the LBT to be used in a corresponding cell is a D-LBT or an O-LBT through a System Information Block (SIB) or Remaining Minimum System Information (RMSI), and all transmissions in the corresponding cell may be performed based only on the LBT of a direction configured through the SIB or the RMSI (i.e., D-LBT or O-LBT).

2. Embodiment #1-2

The BS may semi-statically configure a plurality of entries defined by combining the D-LBT, the O-LBT, and Type 1/2A/2B/2C related to a type of an LBT through a higher layer signal such as RRC, to the UE. In addition, the BS may dynamically indicate one entry among a plurality of entries to the UE through a physical layer signal such as DCI.

3. Embodiment #1-3

Through two independent fields included in a UL grant transmitted by the BS, one field may indicate whether a direction of an LBT is an O-LBT or a D-LBT, and the other field may indicate one of four LBT types (Type 1/2A/2B/2C) dynamically. Alternatively, entries formed by combining all directions and types of the LBT may be predefined or pre-configured, and one of them may be indicated as a specific field in the UL grant. When the field indicating the direction of the LBT is 1 bit, a beam direction when the D-LBT is indicated may be preconfigured by the BS to the UE through RRC signaling such as Spatial Relation Information.
Alternatively, when the BS instructs the UE to either D-LBT or O-LBT and indicates the D-LBT using 1 bit in the UL grant, the beam direction to perform the D-LBT may be based on a TCI State associated with the UL grant received by the UE or based on the TCI State indicated by the BS through the corresponding UL grant or separate DCI.
If the field indicating the direction of the LBT includes a plurality of bits, each bit Status may indicate a D-LBT direction. For example, if the corresponding field is 8 bits, '000' may indicate the O-LBT, and '001' to '111' indicate the D-LBT in a first direction to the D-LBT in a seventh direction, respectively. When the direction of the D-LBT is smaller than the 8-bit Status, some bits may indicate a Reserved status.
In the above example, if the direction of the D-LBT is 4 directions, '001' to '100' may indicate the D-LBT in the first direction to the D-LBT in the fourth direction, respectively, and '101' to '111' may indicate a Reserved status.

4. Embodiment #1-4

Group common PDCCH (GC-PDCCH) transmitted by the BS may be used as an auxiliary means to indicate the direction and type of the LBT.

(1) An LBT type (e.g., Type 1/2A/2B/2C) may be indicated through a UL grant transmitted by the BS, and one of O-LBT/D-LBT may be indicated through GC-PDCCH. At this time, one of the O-LBT or the D-LBT may be pre-configured to the UE in a default LBT direction.
(2) When the UL signal/channel to be transmitted through the GC-PDCCH transmitted by the BS is included in the COT of the BS (e.g., gNB), that is, when the UE is capable of transmitting the corresponding UL signal/channel in the corresponding COT based on COT availability information known through the GC-PDCCH transmitted by the BS, the direction or type of the LBT may be switched. For example, even if the LBT is configured to be performed using LBT Type 1A (e.g., Cat-3 or Cat-4), the type of the LBT to be performed with Type 2A/2B/2C may be switched depending on the size of a transmission gap. Alternatively, even if it is instructed to perform the LBT through the O-LBT, the type of the LBT may be switched to perform the LBT using the D-LBT.
(3) Through the GC-PDCCH transmitted by the BS, the UE may indicate information on a beam direction for performing the D-LBT.

However, the D-LBT instruction/configuration may also include information on a beam direction and beam width for performing the D-LBT on the UE. In addition, the BS may preconfigure a specific state and Type 2C LBT for the LBT direction and instruct the UE to no LBT COT initiating. In addition, in [Proposed Method #1], entries defined using a higher layer signal or a combination of the LBT direction and type defined or configured in the standard may be configured in combination with CAPC or CPE (Cyclic prefix extension) in addition to the LBT direction and type.

In more detail, in [Proposed Method #1], when the BS schedules a UL signal/channel (e.g., PUSCH, PUCCH, SRS, etc.) to the UE, the BS needs to indicate/configure the direction (e.g., whether the direction is omnidirectional or a specific beam direction) and type (e.g., Type 1/2A/2B/2C) of the LBT to be performed before the UE transmits the corresponding UL signal/channel.

According to Embodiment #1-1, the BS may semi-statically configure whether the direction of the LBT is an O-LBT performed omnidirectional or a D-LBT performed in a specific beam direction to the UE through a higher layer signal such as RRC. Therefore, the direction in which the LBT is performed may not be switched dynamically and once the O-LBT or the D-LBT is configured, all LBTs performed before UL transmission are performed only in the configured LBT direction. Therefore, the BS only needs to indicate the type of the LBT to the UE. Therefore, the BS may dynamically indicate one of LBT Types 1/2A/2B/2C to the UE through a physical layer signal such as DCI. For example, if the O-LBT is semi-statically configured to the UE through a higher layer signal such as RRC and Type 1 is indicated by the UL grant, the UE may perform Type 1 O-LBT prior to transmission of the corresponding scheduled UL signal/channel and, if Type 1 O-LBT succeeds, the corresponding UL signal/channel transmission may be started.

According to Embodiment #1-2, as another method of configuring/indicating the direction and type of the LBT, the BS may combine the O-LBT/D-LBT and LBT Type 1/2A/2B/2C and preconfigure a plurality of entry sets defined in one state to the UE through a higher layer signal such as RRC. For example, the BS may configure four entries such as "entry_0: Type 1 O-LBT, entry_1: Type 1 D-LBT, entry_2: Type 2A O-LBT, entry_3: Type 2A D-LBT" to the UE and may indicate one of the four entries through the 2-bit field of UL grant. Then, the UE may transmit the UL signal/channel by performing the LBT in the direction and type of the LBT corresponding to the indicated entry.

As in Embodiment #1-1, the method of preconfiguring whether the LBT is a D-LBT or an O-LBT through a higher layer signal may need RRC reconfiguration for switching the direction of the LBT, and thus it may be difficult to dynamically switch the direction of the LBT. Accordingly, according to Embodiment #1-3, in order to dynamically switch the direction of the LBT, the direction of the LBT as well as the type of LBT may utilize a physical layer signal such as DCI. For example, through two independent fields included in the UL grant, one field may indicate whether the direction of the LBT corresponds to the O-LBT or the D-LBT, and the other field may dynamically indicate one of four types of the LBT (Type 1/2A/2B/2C). Alternatively, entries defined by combining all LBT directions and types may be defined, and one of them may be indicated as a specific field within the UL grant.

In addition, according to Embodiment #1-4, Group common PDCCH (GC-PDCCH) may be used as an auxiliary means when indicating the direction and type of the LBT. For example, one of the O-LBT and the D-LBT may be configured as the default LBT direction to the UE, and the type of the LBT (e.g., Type 1/2A/2B/2C) may be indicated to the UE through the UL grant. At this time, if the UE receives the GC-PDCCH, the direction of the LBT may be switched to the O-LBT or the D-LBT indicated by the GC-PDCCH.

Alternatively, if it is confirmed that the UL signal/channel to be transmitted through the GC-PDCCH is included in the COT of the BS (e.g., gNB), that is, if the UE is capable of transmitting the corresponding UL signal/channel in the corresponding COT based on the COT availability information known through the GC-PDCCH transmitted by the BS, the direction or type of the LBT may be switched.

For example, even if it is configured to perform the LBT using Type 1A (e.g., Cat-3 or Cat-4), the type of the LBT to be performed with Type 2A/2B/2C may be switched according to the size of the transmission gap. In addition, even if it is instructed to perform the LBT through the O-LBT, it may be changed to perform the LBT using the D-LBT.

Basically, the D-LBT indication through a higher layer signal such as RRC or a dynamic signal such as DCI may also include information on a beam direction and/or beam width to perform the LBT. In addition, the beam direction and/or beam width for performing the LBT may be configured based on a TCI State indicated through the DCI or the TCI State associated with the DCI. In addition, when the direction of the beam that is initially indicated intends to be switched, information on a beam direction in which the UE performs the D-LBT through the GC-PDCCH to induce switching of the beam direction.

In other words, even if the D-LBT is configured to a specific beam direction and/or specific beam width through Embodiment #1-1 to Embodiment #1-3, the specific beam direction and/or specific beam width of the D-LBT configured through the GC-PDCCH based on Embodiment #1-4 may be switched.

In addition, if COT initiating based on no LBT is possible under regulations of a specific country or region, the BS may preconfigure a specific state for the direction of the LBT and Type 2C LBT, and indicate no LBT COT initiating to the UE.

[Proposed Method #2]

A method of instructing/setting the direction and type of LBT of the UE based on an association relationship between DL/LTL beams or spatial relation information will be described.

1. Embodiment #2-1

Depending on spatial relation information connected to the UL signal/channel, it may be possible to indicate/determine whether the direction of the LBT to be performed by the UE is an O-LBT or a D-LBT. For example, when a reference signal of the spatial relation information related to a scheduled UL signal/channel is an SSB, the direction of the LBT may be indicated/determined to be the O-LBT, and when the reference signal of the spatial relation information is a CSI-RS, the direction of the LBT may be indicated/determined to be the D-LBT.

2. Embodiment #2-2

The direction of the LBT for UL transmission in the COT may be determined as either the O-LBT or the D-LBT according to whether the SSB is included in the COT within the COT period of the BS or within the COT within the fixed frame period (FFP). In other words, depending on whether there is an SSB transmitted within the corresponding COT, the LBT direction for UL transmission may be determined as either the O-LBT or the D-LBT.

3. Embodiment #2-3

The direction and type of the LBT to be performed by the UE may be determined using an association relationship between DL/LTL beams.

(1) D-LBT + Type 2A/2B/2C may be performed in a beam direction indicated/scheduled for UL signal/channel transmission indicated/scheduled based on a UL TX beam associated with the DL TX beam or the corresponding DL Tx beam in terms of a UE.
(2) D-LBT + Type 1 (e.g., Cat-3 or Cat-4) or O-LBT + Type 1 (e.g., Cat-3 or Cat-4) may be performed in a beam direction indicated/scheduled for UL signal/channel transmission indicated/scheduled in another direction that is not a DL TX beam or a UL TX beam associated with the corresponding DL Tx beam. However, O-LBT + Type 2A/2B may also be applicable under a specific condition.

4. Embodiment #2-4

A UL signal/channel may be transmitted using the same LBT direction and type as the LBT direction and type used by the BS for DL transmission. Alternatively, the LBT direction and type associated with a specific DL signal/channel and resource may be preconfigured, and the UE may transmit the UL signal/channel based on the LBT direction and type associated with the specific DL signal / channel and resource.

(1) The LBT direction and type used by the BS for DL transmission may be informed explicitly through a specific field in the PDCCH or implicitly through a specific DL signal/channel.

5. Embodiment #2-5

Depending on a UL or DL transmission length, the LBT direction of the UE or BS may be determined as one of O-LBT and D-LBT.

(1) D-LBT may always be applied to a relatively short UL/DL channel, and O-LBT may always be applied to a relatively long UL/DL channel.

Directional transmission that concentrates energy in a specific beam direction rather than omnidirectional based on analog beamforming technology using multiple antennas to overcome path loss in the high frequency band of 52 GHz or higher and D-LBT may be used. While performing beam sweeping in all directions, the BS and the UE can map an association between transmission/reception beams through transmitted SSB or CSI-RS in a specific beam direction. there is. That is, the UE may associate the corresponding Tx beam with the Rx beam by reporting an Rx beam that is most easily received for a specific Tx beam of the BS.

The UE may utilize spatial relation information connected to the UL signal/channel, such as Embodiment #2-1, in order to determine whether the direction of the LBT to be used for UL signal/channel transmission is O-LBT or D-LBT. For example, PUCCH-SpatialRelationInfo can be used to set a spatial setting for PUCCH transmission, and one of SSB index, CSI-RS or SRS can be set as a reference signal for this.

Similarly, in the case of SRS-SpatialRelationInfo, one of SSB index, NZP-CSI-RS index, or SRS may be set as a reference signal.

At this time, since UL transmission in the SSB reception direction can be relatively wide beam, O-LBT is applied to UL signal/channel transmission connected to the SSB reception direction, and UL transmission in the CSI-RS reception direction is relatively narrow beam. Therefore, D-LBT may be applied to UL signal/channel transmission associated with the CSI-RS reception direction. That is, D-LBT and O-LBT can be implicitly instructed according to the interlocked DL signal.

In addition, according to Embodiment #2-2, the UE sets the LBT direction for UL transmission in the COT according to whether SSB is included in the COT period of the BS or in the COT within the FFP (fixed frame period) O-LBT Or it can be decided as one of D-LBT. In other words, depending on whether there is an SSB transmitted within the corresponding COT, the LBT direction for UL transmission may be determined as either O-LBT or D-LBT.

For example, the UE performs D-LBT when the SSB is included (or transmitted) within the COT interval of the BS, and O when the SSB is not included (or transmitted) within the COT interval of the BS. -Can perform LBT. Of course, on the contrary, O-LBT may be performed when the SSB is included (or transmitted), and D-LBT may be performed when the SSB is not included (or transmitted).

In addition, if it is determined that the UE will perform D-LBT, the direction of D-LBT may be set in advance by the BS to the UE through RRC signaling such as Spatial Relation Information. Alternatively, it may be set based on the TCI State associated with the UL grant received by the UE for UL transmission, or based on the TCI State indicated by the BS through the corresponding UL grant or a separate DCI.

Alternatively, the direction of the D-LBT may be set through one or more bits included in the DCI.

In addition, the direction and type of LBT can be determined using the association relationship between DL / UL beams. As in Embodiment # 2-3, the DL TX beam transmitted by the BS or associated with the corresponding DL TX beam (D-LBT + Type 2A or 2B or 2C) may be performed in the direction of the indicated/scheduled beam for UL signal/channel transmission indicated/scheduled based on an association UL TX beam..

For UL transmission indicated/scheduled based on a direction other than the DL TX beam or the UL TX beam associated with the DL TX beam, D in the direction of the indicated/scheduled beam -LBT + Type 1 or O-LBT + Type 1 can be applied. This means that UL signal/channel transmission in a direction with no association cannot perform and transmit Type 2 series LBT within the COT, and Type 1 LBT must be performed in an omnidirectional or specific beam direction. can do. However, O-LBT + Type 2A/2B instead of Type 1 LBT may be allowed even for UL transmission indicated/scheduled in a different direction that is not associated with in order to increase the UE's channel access opportunity.

The UE may transmit a UL signal/channel based on the same LBT direction and type as the LBT direction and type used by the BS for DL transmission. Alternatively, the UL signal / channel may be transmitted based on the LBT direction and type associated with the corresponding DL signal / channel and resource in advance. For example, when the BS transmits the PDCCH, information on the LBT direction used by the BS may be explicitly included in the PDCCH and transmitted.

In addition, when receiving a DL signal transmitted on a specific resource or receiving a specific DL signal / channel, the UE may perform UL transmission in the LBT direction (e.g., O-LBT or D-LBT) associated with the resource.

Since D-LBT determines LBT success by measuring energy in a relatively narrow area compared to O-LBT, channel access opportunities may be relatively high. Therefore, D-LBT is always applied to UL channels/signals that are relatively short in length, such as Request to Send (RTS), Clear to Send (CTS) or PUCCH with a short duration, and O-LBT can be applied to the channel.

The short and long degree of the signal for determining D-LBT and O-LBT, that is, the length of the signal can be set in advance from the BS. For example, transmission within 2 symbols may be set to always apply D-LBT.

[Proposed Method #3]

When the UE performs a RACH procedure for reasons such as initial access or synchronization, LBT direction and LBT type for UL transmission (e.g., PRACH, MSG3, msgAPUSCH) are configured / Let's take a look at how to direct it.

1. Embodiment #3-1

Depending on whether the BS is CBRA or CFRA for each RO (RACH Occasion)/Preamble, the direction and type of the LBT may be configured/indicated differently. At this time, SIB, RMSI or RRC may be used to configure/indicate the direction and type of the LBT.

2. Embodiment #3-2

A method of configuring/indicating the direction and type of the LBT to be used in msgA PUSCH transmission of a Msg3 or 2-step RACH procedure will be described.

(1) The BS may preconfigure one of the D-LBT and the O-LBT semi-statically through SIB/RMSI, and may indicate the type of the LBT (e.g., Type 1/2A/2B/2C) through a UL grant.

(2) The BS may preconfigure a table configured with a plurality of entries defined by combining D-LBT/O-LBT and LBT Type 1/2A/2B/2C through RRC and may indicate one entry in the configured entry set through DCI.

(3) A plurality of entries defined by combining the D-LBT/O-LBT and Type 1/2A/2B/2C may be defined in a table in the standard. Alternatively, one of the D-LBT/O-LBT may be preconfigured in a basic LBT direction and entries including Type 1/2A/2B/2C may be predefined as a table. In addition, the BS may indicate one of the entries of the defined table through the DCI.

(4) The BS may dynamically indicate the direction of the LBT (e.g., O-LBT / D-LBT) and the type of the LBT (e.g., Type 1/2A/2B/2C) through a UL grant.

In addition, entries defined by combining LBT directions and types defined or configured in a higher layer signal or the standard may be configured in a combination with CAPC or cyclic prefix extension (CPE) in addition to the LBT direction and type.

The BS may broadcast information necessary for cell access through an SIB and an RMSI for a UE initially accessing a cell. This may include information related to the RACH configuration, and the UE may obtain information on time and frequency resources for transmitting a PRACH and information on a preamble sequence for the corresponding PRACH based on the above-described RACH configuration. Since the LBT is necessarily accompanied in all transmissions of RACH procedures in an unlicensed band, it may be necessary to indicate the direction and type of the LBT.

According to Embodiment #3-1, the BS may configure/indicate the direction and type of the LBT differently according to whether the BS is contention-based random access (CBRA) or contention-free random access (CFRA) for each RO and for each preamble. For example, O-LBT + Type 1 may be configured for ROs of a specific period, and D-LBT + Type 1 may be configured for ROs of other periods in order to increase channel access opportunity of the UE. Alternatively, different LBT directions and LBT types may be configured for respective preambles. Alternatively, O-LBT + type 1 may be configured/indicated in the case of CBRA, and D-LBT + type 1 may be configured/indicated in the case of CFRA.

In addition, according to Embodiment #3-2, the direction and type of the LBT to be used for msgA PUSCH transmission may be configured/indicated in Msg3 transmission or 2-step RACH procedure. For example, the BS may semi-statically preconfigure information related to the LBT direction (e.g., one of the D-LBT and the O-LBT) through an SIB/RMSI, and the LBT type (e.g., e.g., Type 1/2A/2B/2C) may be indicated through a UL grant. Alternatively, a plurality of entries defined by combining the direction of the LBT (e.g., D-LBT or O-LBT) and the type of the LBT (e.g., Type 1/2A/2B/2C) may be configured through RRC or one entry in the set of entries configured based on the table defined in the standard through DCI. Here, when a table for fallback DCI is used, the direction of the LBT (e.g., O-LBT or D-LBT) may be defined or configured in advance in the standard, and the type of the LBT (e.g., Type 1/2A/2B/2C) may be dynamically indicated. Alternatively, the direction of the LBT (e.g., O-LBT or D-LBT) and the type of the LBT (e.g., Type 1/2A/2B/2C) may be dynamically indicated through the UL grant.

Now, based on FIG. 31, [Proposed Method #4] will be described. In [Proposed Method #4] below, LBT Type 1 may correspond to Random Back-off based Cat-3 LBT or Random Back-off based Cat-4 LBT, and Type 2A/2B may correspond to Cat-2 LBT that is not based on Random Back-off. In addition, Type 2C may correspond to Cat-1 LBT that does not perform the LBT.

[Proposed Method #4]

A method of configuring/indicating a direction and type of an LBT to be performed by the BS when the remaining COT after UL transmission within a COT acquired through D-LBT Type 1 (e.g., D-LBT Cat-3 or Cat-4) or O-LBT Type 1 (e.g., O-LBT Cat-3 or Cat-4) for Configured grant PUSCH (CG-PUSCH) transmission in a resource configured from the BS is transferred to the BS and the remaining COT is to be used in DL transmission will be described.

1. Embodiment #4-1

When the BS configures the Configured grant resource to the UE, the direction of the LBT to be used when performing UL transmission in the corresponding resource for each resource (e.g., O-LBT or D-LBT) and the type of the LBT (e.g., Type 1/ 2A/2B/2C) may be configured.

2. Embodiment #4-2

Transmission of a plurality of beams may be configured to be enabled for a specific CG resource preconfigured to a UE by a BS, and the UE may indicate information on a direction in which the UE succeeds in an actual LBT through Configured Grant-Uplink Control Information (CG-UCI ). Alternatively, the BS may explicitly indicate information on a beam direction to perform the D-LBT.

(1) The UE may dynamically indicate the LBT direction (e.g., D-LBT or O-LBT) to be performed by the BS through the CG-UCI.
(2) In advance, the BS may configure D-LBT entries for each beam direction to the UE, and the UE may indicate one entry corresponding to a direction in which the BS is supposed to perform the D-LBT to the BS through CG-UCI.
(3) The BS may semi-statically configure a plurality of entries defined by combining an O-LBT, a D-LBT, and a direction to perform the LBT to the UE through a higher layer signal such as RRC, and the UE may indicate one entry among entries configure dynamically through CG-UCI to the BS.

3. Embodiment #4-3

An association relationship between DL/LTL beams may be used.

(1) D-LBT + Type 2A/2B/2C may be performed in a beam direction in which a DL signal/channel is to be transmitted for DL signal/channel transmission to be transmitted by the BS based on a UL TX beam or a DL TX beam associated with the corresponding UL TX beam.
(2) For DL signal/channel transmission to be transmitted based on another direction that is not a UL TX beam or a DL TX beam associated with the UL TX beam, D-LBT + Type 1 (e.g., Cat-3 or Cat-4) or O-LBT + Type 1 (e.g., Cat-3 or Cat-4) may be performed in the other beam direction in which a DL signal/channel is to be transmitted. However, O-LBT + Type 2A/2B may also be applied under a specific condition.

4. Embodiment #4-4

The LBT direction of the BS (e.g., O-LBT or D-LBT) may be implicitly indicated according to whether a reference signal of spatial relation information associated with a PUSCH transmitted using a specific CG-PUSCH transmitted by a UE or a preconfigured specific CG resource is an SSB or a CSI-RS.
In the above, the CG-UCI refers to Uplink Control Information (UCI) that is always multiplexed and transmitted together during CG-PUSCH transmission, and may include HARQ process ID, NDI, UE ID, and the like. In addition, entries defined by combining the LBT direction and type defined or configured in a higher layer signal or the standard above may be configured in a combination with Channel Access Priority Class (CAPC) or Cyclic prefix extension (CPE) in addition to the LBT direction and type.
The UE may transmit a Configured grant PUSCH (CG-PUSCH) after performing D-LBT + Type 1 (e.g., Cat-3 or Cat-4) or O-LBT + type 1 LBT (e.g., Cat-3 or Cat-4) in a time and frequency resource preconfigured by the BS. When the COT remains after performing all UL transmissions in the COT obtained through the LBT, the remaining COT may be transferred to the BS to perform a UL-to-DL COT sharing operation for performing only Cat-2 LBT and perform DL transmission. In this case, the UE needs to configure/indicate the direction and type of the LBT to be performed within the COT to the BS.
As in Embodiment #4-1, when the BS configures a CG resource to the UE, the direction of the LBT (e.g., O-LBT or D-LBT) and the type of the LBT (e.g., Type 1/2A/2B/2C) used when transmitting a CG-PUSCH in the corresponding resource for each resource. In addition, the BS may also configure a beam direction for performing the D-LBT and/or a beam direction for transmitting a CG-PUSCH with respect to CG resources for the D-LBT. In other words, if the UE transmits the CG-PUSCH on a specific resource, the LBT may be performed based on the direction of the LBT and the type of the LBT corresponding to the specific resource.
As in Embodiment #4-2, when the BS configures the CG resource to the UE, transmission of a plurality of beams for a specific CG resource may be configured to be enabled. The UE may inform the BS of information on the direction in which the actual LBT is successfully performed through the CG-UCI, or explicitly inform the BS of the type of the LBT to be performed and/or the direction of the beam to perform the D-LBT.
At this time, the LBT direction may be preconfigured as one of the D-LBT and the O-LBT, and the type of the LBT (e.g., Type 1/2A/2B/2C) may be dynamically indicated through CG-UCI. In addition, a plurality of entries defined by combining the D-LBT and the O-LBT related to the LBT direction and Type 1/2A/2B/2C related to the LBT type may be semi-statically configured through a higher layer signal such as RRC, and one entry may be dynamically indicated through CG-UCI.

In addition, the UE may dynamically indicate each of the LBT direction and the LBT type through the CG-UCI. For example, entries defined by combining all LBT directions and types may be defined or configured in advance, and one entry may be indicated to the BS through the CG-UCI.

In addition, as in Embodiment #4-3, the direction and type of the LBT may be determined using an association relationship between DL/LTL beams.

For example, for a DL signal/channel to be transmitted through a UL TX beam transmitted by the UE or a DL TX beam associated with the corresponding UL TX beam, D-LBT + Type 2A or 2B or 2C may be performed in a UL TX beam direction in transmission of the UE or a DL TX beam direction in a DL TX beam direction associated with the corresponding UL TX beam.

If, for DL transmission to be transmitted in a direction other than a UL TX beam or a DL TX beam associated with the UL TX beam, D-LBT + Type 1 or O-LBT + Type 1 may be applied. This is because DL signal/channel transmission in a direction without a association relationship is not capable of performing a Type 2 (e.g., Cat-2) series LBT within the COT, and thus this may mean that Type 1 (e.g., Cat-3 or Cat-4) LBT is performed omnidirectional or in a specific beam direction. However, O-LBT + Type 2A/2B instead of Type 1 LBT may be allowed even for DL transmission to be transmitted in another direction that is not associated in order to increase channel access opportunity of the UE.

It is obvious that examples of the proposed methods described above may also be included as one of the implementation methods of the present disclosure, and thus may be regarded as a kind of proposed methods. In addition, the above-described proposed methods may be implemented independently, but may also be implemented in a combination (or merged) form of some proposed methods. For example, one example of [Proposed Method #1] to [Proposed Method #4] may be implemented independently, but two or more may be combined and implemented.

A rule may be defined to indicate information on whether the proposed methods (information on rules of the proposed methods) are applied through a signal predefined to the UE by the BS or predefined to a receiving UE by a transmitting UE (or physical layer signal or higher layer signal).

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 26 illustrates a communication system 1 applied to the present disclosure.

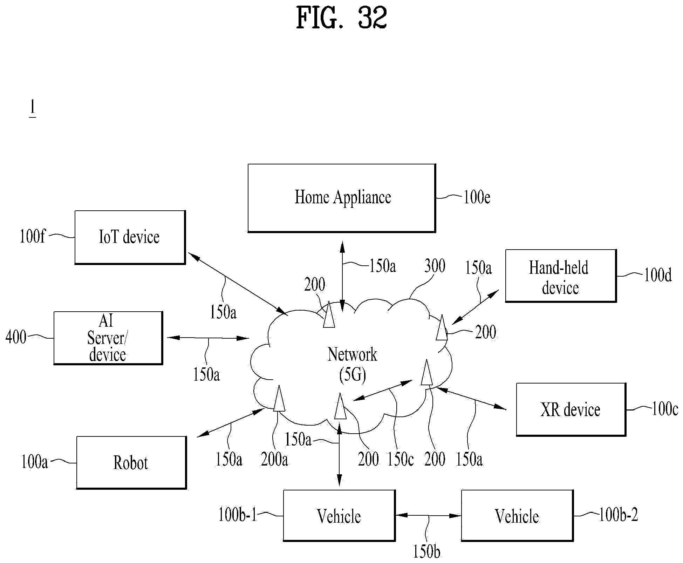

Referring to FIG. 32, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5GNR) such as UL/DL communication 150a, sidelink communication 150b (or, D2D communication), or inter-BS communication (e.g. relay or integrated access backhaul(IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

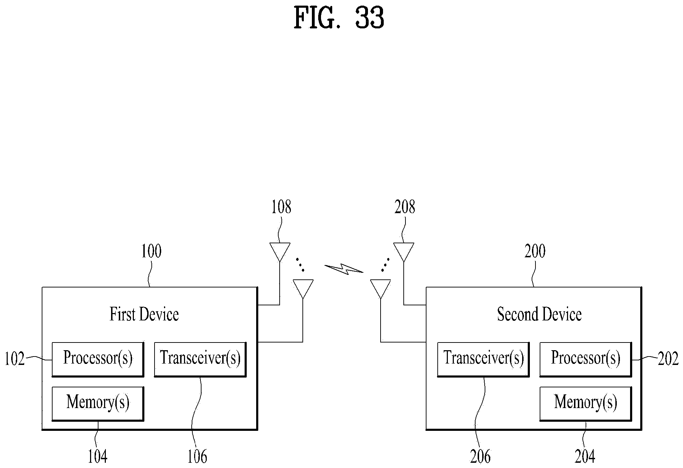

FIG. 33 illustrates wireless devices applicable to the present disclosure.

Referring to FIG. 33, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 32.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an embodiment of the present disclosure will be described.

Although the following operations will be described based on a control operation of the processor(s) 102 in terms of the processor(s) 102, software code for performing such an operation may be stored in the memory(s) 104. For example, in the present disclosure, the at least one memory(s) 104 may be a computer-readable storage medium and store instructions or programs. The instructions or programs may cause, when executed, the at least one processor operably connected to the at least one memory to perform operations according to embodiments or implementations of the present disclosure, related to the following operations.

In detail, the processor 102 may control the transceiver 106 to receive a signal related to the direction and type of the LBT to be performed by the processor 102 from the BS. The processor 102 may obtain first information related to the direction of the LBT and second information related to the type of the LBT based on the received signal. Here, a specific method of acquiring the first information and the second information based on the signal received by the processor 102 may follow [Proposed Method #1] to [Proposed Method #3].

The processor 102 may perform the LBT based on the first information and the second information and control the transceiver 106 to transmit an uplink signal to the BS based on a successful LBT.

The processor 102 may control the transceiver 106 to receive information for configuring CG-PUSCH resources from the BS. The processor 102 may perform a first LBT for CG-PUSCH transmission. In addition, the processor 102 may control the transceiver 106 to transmit the CG-PUSCH to the BS within the COT obtained due to success of the first LBT based on the success of the first LBT.

Also, the processor 102 may control the transceiver 106 to receive a downlink signal transmitted by the BS.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor(s) 202 of the second wireless device 100 and stored in the memory(s) 204 of the second wireless device 200, according to an embodiment of the present disclosure will be described.

Although the following operations will be described based on a control operation of the processor(s) 202 in terms of the processor(s) 202, software code for performing such an operation may be stored in the memory(s) 204. For example, in the present disclosure, the at least one memory(s) 204 may be a computer-readable storage medium and store instructions or programs. The instructions or programs may cause, when executed, the at least one processor operably connected to the at least one memory to perform operations according to embodiments or implementations of the present disclosure, related to the following operations.

Specifically, the processor 202 may control the transceiver 206 to transmit a signal related to the direction and type of the LBT to be performed by the UE. Here, a signal related to the direction of the LBT and the type of the LBT transmitted by the processor 202 to the UE may be determined according to [Proposed Method #1] to [Proposed Method #3].

The processor 202 may control the transceiver 206 to receive an uplink signal from the UE.

The processor 202 may control the transceiver 206 to transmit information for configuring a CG-PUSCH resource to the UE. The processor 202 may control the transceiver 206 to receive the CG-PUSCH within the COT acquired by the UE.

The processor 202 may acquire first information related to the direction of the second LBT to be performed by the processor 202 and second information related to the type of the second LBT based on [Proposed Method #4]. The processor 202 may perform the second LBT based on the first information and the second information. In addition, the processor 202 may control the transceiver 206 to transmit a downlink signal to the UE based on success of the second LBT.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

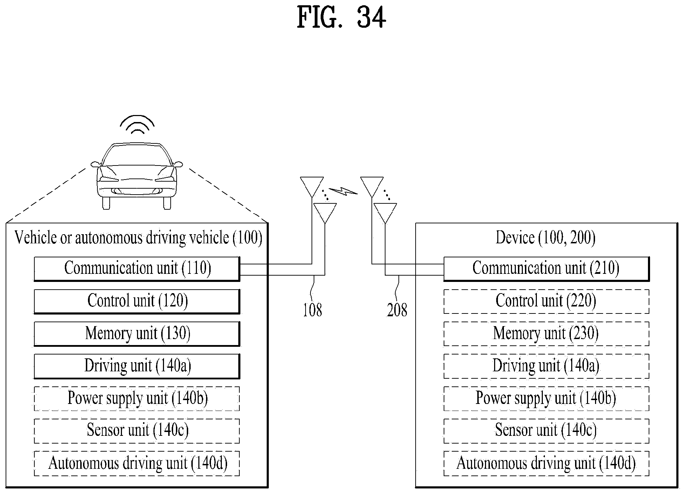

FIG. 34 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 34, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

The embodiments of the present disclosure described herein below are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It will be obvious to those skilled in the art that claims that are not explicitly cited in each other in the appended claims may be presented in combination as an embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term 'BS' may be replaced with the term 'fixed station', 'Node B', 'enhanced Node B (eNode B or eNB)', 'access point', etc.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

The method of performing a channel access procedure (CAP) and apparatus therefor have been described based on the 5th generation (5G) new radio access technology (RAT) system, but the method and apparatus are applicable to various wireless communication systems including the 5G new RAT system.

## Claims

1. A method of transmitting an uplink signal by a user equipment (UE) in a wireless communication system, the method comprising:

   receiving downlink control information (DCI) for scheduling the uplink signal;
   performing Listen-before-Talk (LBT); and
   based on success of the LBT, transmitting the uplink signal based on the DCI,
   wherein at least one of a direction of the LBT or a type of the LBT is based on at least one of Spatial Relation Information for the uplink signal or an association relationship between the DCI and the uplink signal.

2. The method of claim 1, wherein the direction of the LBT is determined based on a reference signal of the Spatial Relation Information.

3. The method of claim 1, wherein the direction of the LBT is determined based on whether a Synchronization Signal Block (SSB) is transmitted within a Channel Occupancy Time (COT) acquired by a base station (BS).

4. The method of claim 1, wherein:

   based on that the DCI and the uplink signal are related, the LBT is performed without a Random Back-off Counter; and
   based on that the DCI and the uplink signal are not related, the LBT is performed based on the Random Back-off Counter.

5. The method of claim 1, wherein the direction of the LBT and the type of the LBT are based on an LBT direction and LBT type used in transmission of the DCI.

6. A user equipment (UE) for transmitting an uplink signal in a wireless communication system, comprising:

at least one transceiver;
at least one processor; and
at least one memory operatively connected to the at least one processor and configured to store instructions that when executed causes the at least one processor to perform an operation including:

receiving downlink control information (DCI) for scheduling the uplink signal through the at least one transceiver;
performing Listen-before-Talk (LBT); and
based on success of the LBT, transmitting the uplink signal based on the DCI through the at least one transceiver,
wherein at least one of a direction of the LBT or a type of the LBT is based on at least one of Spatial Relation Information for the uplink signal or an association relationship between the DCI and the uplink signal.

7. The UE of claim 6, wherein the direction of the LBT is determined based on a reference signal of the Spatial Relation Information.

8. The UE of claim 6, wherein the direction of the LBT is determined based on whether a Synchronization Signal Block (SSB) is transmitted within a Channel Occupancy Time (COT) acquired by a base station (BS).

9. The UE of claim 6, wherein:

based on that the DCI and the uplink signal are related, the LBT is performed without a Random Back-off Counter; and
based on that the DCI and the uplink signal are not related, the LBT is performed based on the Random Back-off Counter.

10. The UE of claim 6, wherein the direction of the LBT and the type of the LBT are based on an LBT direction and LBT type used in transmission of the DCI.

11. A device for transmitting an uplink signal in a wireless communication system, comprising:

at least one processor; and
at least one memory operatively connected to the at least one processor and configured to store instructions that when executed causes the at least one processor to perform an operation including:

receiving downlink control information (DCI) for scheduling the uplink signal;
performing Listen-before-Talk (LBT); and
based on success of the LBT, transmitting the uplink signal based on the DCI,
wherein at least one of a direction of the LBT or a type of the LBT is based on at least one of Spatial Relation Information for the uplink signal or an association relationship between the DCI and the uplink signal.

12. A computer-readable storage medium including at least one computer program that causes at least one processor to perform an operation, the operation comprising:

receiving downlink control information (DCI) for scheduling the uplink signal;
performing Listen-before-Talk (LBT); and
based on success of the LBT, transmitting the uplink signal based on the DCI,
wherein at least one of a direction of the LBT or a type of the LBT is based on at least one of Spatial Relation Information for the uplink signal or an association relationship between the DCI and the uplink signal.

13. A method of receiving an uplink signal by a base station (BS) in a wireless communication system, the method comprising:

transmitting downlink control information (DCI) for scheduling the uplink signal; and
receiving the uplink signal based on the DCI through at least one direction of a plurality of directions,
wherein the at least one direction is based on at least one of Spatial Relation Information for the uplink signal or an association relationship between the DCI and the uplink signal.

14. A base station (BS) for receiving an uplink signal in a wireless communication system, comprising:

at least one transceiver;
at least one processor; and
at least one memory operatively connected to the at least one processor and configured to store instructions that when executed causes the at least one processor to perform an operation including:

transmitting downlink control information (DCI) for scheduling the uplink signal through the at least one transceiver; and
receiving the uplink signal based on the DCI through at least one direction of a plurality of directions through the at least one transceiver,
wherein the at least one direction is based on at least one of Spatial Relation Information for the uplink signal or an association relationship between the DCI and the uplink signal.

# FIG. 1

INITIAL CELL SEARCH — PSS/SSS & [DLRS] & PBCH — S11

SYSTEM INFORMATION RECEPTION — PDCCH/ PDSCH (BCCH) — S12

RANDOM ACCESS PROCEDURE — PRACH (S13) — PDCCH/ PDSCH (S14) — PRACH (S15) — PDCCH/ PDSCH (S16)

GENERAL DL/UL Tx/Rx — S18 — PDCCH/ PDSCH — PUSCH PUCCH — S17

• DL/UL ACK/NACK
• UE CQI/PMI/RI RANK REPORT USING PUSCH AND PUCCH

EP 4 231 760 A1

# FIG. 2

| | One Frame (10ms) | |
|---|---|---|
| ...... | | .... |

| | Half-Frame (5ms) | Half-Frame (5ms) | |
|---|---|---|---|
| ...... | | | .... |

| | Subframe 0 (1ms) | | Subframe 4 (1ms) | Subframe 5 (1ms) | | Subframe 9 (1ms) | |
|---|---|---|---|---|---|---|---|
| ...... | | ...... | | | ...... | | .... |

Subframe (1ms)

**15KHz** — Slot (14 symbols)

1ms

**30KHz** — Slot 0 (14 symbols) | Slot 1

500us

**60KHz** — Slot 0 (14 symbols) | Slot 1 | Slot 2 | Slot 3

250us

**120KHz** — Slot 0 (14 symbols) | Slot 1 | Slot 2 | Slot 3 | Slot 4 | Slot 5 | Slot 6 | Slot 7

125us

# FIG. 3

Resource grid

A carrier
(up to 3300 subcarriers, i. e., 275 RBs)

A BWP

1 RB = 12 subcarriers

1 RE

1 subcarrier

1 symbol

k = 0

l = 0 ·····

# FIG. 4

# FIG. 5

UE

Cell (e.g., BS)

Master Information Block

System Information Block Type1

System Information Request

System Information messages

# FIG. 6

# FIG. 7

701 — Msg1 : random access preamble

703 — Msg2 : random access response

705 — Msg3 : scheduled transmission on PUSCH

707 — Msg4 : contention resolution

( a )

Msg. 2 : RA response Msg. 4 : RRC connection setup

BS

No response    No response ...

Power Ramping    Power Ramping

UE

Msg. 1    Msg. 3 : RRC connecion Request    RRC connectecd

( b )

# FIG. 8

UE                                                                BS

801    MsgA : PRACH preamble + data
       Msg1 + Msg3

803    MsgB : random access response
       Msg2 + Msg4

# FIG. 9

# FIG. 10

Mapping between SSB blocks and uplink resources for PRACH transmission

| Downlink SS block 1 | Downlink SS block 2 | Downlink SS block 3 | Downlink SS block 4 | | Uplink 1 | Uplink 2 | Uplink 3 | Uplink 4 |

. . .

BS

BS

PSS, SSS, PBCH reception

PRACH transmission (same transmit beam direction as in the downlink transmit beam)

# FIG. 11

(a)

| Downlink SS block 1 | Downlink SS block 2 | Downlink SS block 3 | Downlink SS block 4 |

Mapping →

| PRACH Occasion 1 | PRACH Occasion 2 | PRACH Occasion 3 | PRACH Occasion 4 |

(b)

| Downlink SS block 1 | Downlink SS block 2 | Downlink SS block 3 | Downlink SS block 4 |

Mapping →

PRACH Occasion 4
PRACH Occasion 3
PRACH Occasion 2
PRACH Occasion 1

(c)

| Downlink SS block 1 | Downlink SS block 2 | Downlink SS block 3 | Downlink SS block 4 |

Mapping →

| PRACH Occasion 2 | PRACH Occasion 4 |
| PRACH Occasion 1 | PRACH Occasion 3 |

(d)

| Downlink SS block 1 | Downlink SS block 2 | Downlink SS block 3 | Downlink SS block 4 |

Mapping →

| PRACH Occasion 1 | PRACH Occasion 2 | PRACH Occasion 3 | PRACH Occasion 4 |
| PRACH Occasion 1 | PRACH Occasion 2 | PRACH Occasion 3 | PRACH Occasion 4 |

# FIG. 12

(a) Uplink Tx procedure based on dynamic grant

(b) Uplink Tx procedure based on configured grant

# FIG. 13

(a) Option 1

(b) Option 2

Initial transmission

Following repetition

EP 4 231 760 A1

# FIG. 14

(a) Carrier aggregation between L-band and U-band

(b) Standalone U-band(s)

# FIG. 15

# FIG. 16

# FIG. 17

frequncy

BWP
{
| LBT-SB#(K-1) (e.g., 20MHz) |
| ... |
| LBT-SB#1 (e.g., 20MHz) |
| LBT-SB#0 (e.g., 20MHz) |

# FIG. 18

# FIG. 19

frequncy

Interlace #0
Interlace #1
Interlace #2

| CRB index | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| BWP | RB set #0 | | | | | GB #0 | | RB set #1 | | | | | | | GB #1 | RB set #2 | | | | |

RB assignment information for PUSCH: {Interlace #2, RB set #1} = > Intersection of Interlace # and RB set #1

(a)  Case 1: one SB index is indicated via RA information for PUSCH

Interlace #0
Interlace #1
Interlace #2

| CRB index | 15 | 16 | 17 | 18 | 19 | 20 | 21 | 22 | 23 | 24 | 25 | 26 | 27 | 28 | 29 | 30 | 31 | 32 | 33 | 34 |
|---|---|---|---|---|---|---|---|---|---|---|---|---|---|---|---|---|---|---|---|---|
| BWP | RB set #0 | | | | | GB #0 | | RB set #1 | | | | | | | GB #1 | RB set #2 | | | | |

RB assignment information for PUSCH: {Interlace #2, RB sets #1/#2} = >
= > Intersection of Interlace # and RB set #1/GB #2/RB set #1

(a)  Case 2: consecutive SB index is indicated via RA information for PUSCH

# FIG. 20

EP 4 231 760 A1

# FIG. 21

# FIG. 22

UE
BS

CSI-Resource config IE
(CSI-SSB-Resource Set List) —— S2210

SSB resource —— S2220

Beam report(best SSBRI and RSRP) —— S2230

# FIG. 23

(a)

(b)

# FIG. 24

UE                                                                  BS

NZP CSI-RS resource set IE ———————————————————— S2410

CSI resource(s) configured with repetition 'ON'
through same Tx beam ———————————————————— S2420

Determine Rx beam ⟩— S1730

Omit CSI reporting (no report) — — — — — — — — — S2440

(a)

UE                                                                  BS

NZP CSI-RS resource set IE ———————————————————— S2450

CSI resouece(s) configured with repetition 'OFF'
through different Tx beam ———————————————————— S2460

Determine best beam ⟩— S2470

CSI report (CRI / RSRP) ———————————————————— S2480

(b)

# FIG. 25

# FIG. 26

BS Rx beam sweeping

BS Rx beam fixing

SRS#0 Rx
SRS#1 Rx
SRS#N-1 Rx

. . .

SRS #0,1,...,N-1

SRS#0
SRS#1

UE Tx beam (fixed)

UE Tx beam sweeping

(a)

(b)

# FIG. 27

UE                                                          BS

SRS Config. IE
(usage = BM. SRS-SpatiaRelation Info)

S2710

Determine Tx beam
for SRS resource

S2720

S2730

SRS with determined Tx beam

feedback

S2740

# FIG. 28

Beam group

Beam #1

Beam #2

Beam #3

Beam #4

Beam #5

(a)

Omnidirectional

(b)

# FIG. 29

CCA                                    CCA                                    CCA

UUT
CCA

UUT
Transmission

Channel Occupancy          Idle          Channel Occupancy          Idle
Time                    Period                Time                    Period

Fixed Frame Period                         Fixed Frame Period

# FIG. 30

| UE | | BS |
|---|---|---|

Transmitting a signal related to (i) direction of LBT and (ii) type of LBT — S3010

Obtaining (i) first information related to direction of LBT and (ii) second information related to type of LBT based on the signal — S3020

Performing LBT based on the first information and second information — S3030

Transmitting Uplink signal based on the LBT being succeed — S3040

# FIG. 31

```
     UE                                                          BS

      │    Transmitting information related to resources of CG-PUSCH   │ ⌐ S3110
      │◄──────────────────────────────────────────────────────────────│
┌──────────────────────┐
│ Performing 1ˢᵗ LBT   │ ⌐ S3120
└──────────────────────┘
      │              Transmitting CG-PUSCH                             │ ⌐ S3130
      │──────────────────────────────────────────────────────────────►│
                                    ┌──────────────────────────────────┐
                                    │ Obtaining (i) first information   │
                                    │ related to direction of 2ⁿᵈ LBT   │ ⌐ S3140
                                    │ and (ii) second information       │
                                    │ related to type of 2ⁿᵈ LBT        │
                                    └──────────────────────────────────┘
                                    ┌──────────────────────────────────┐
                                    │ Performing the 2ⁿᵈ LBT based on   │
                                    │ the first information and second  │ ⌐ S3150
                                    │ information                       │
                                    └──────────────────────────────────┘
      │   Transmitting Downlink signal based on the 2ⁿᵈ LBT being succeed │ ⌐ S3160
      │◄──────────────────────────────────────────────────────────────│
```

FIG. 32

# FIG. 33

# FIG. 34

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

<div align="center">

**INTERNATIONAL SEARCH REPORT**

</div>

| | International application No. |
|---|---|
| | **PCT/KR2021/013585** |

| A. | CLASSIFICATION OF SUBJECT MATTER |
|---|---|

**H04W 74/08**(2009.01)i; **H04W 74/00**(2009.01)i; **H04W 72/12**(2009.01)i; **H04W 72/04**(2009.01)i; **H04W 16/28**(2009.01)i; **H04W 16/14**(2009.01)i

According to International Patent Classification (IPC) or to both national classification and IPC

| B. | FIELDS SEARCHED |
|---|---|

Minimum documentation searched (classification system followed by classification symbols)

H04W 74/08(2009.01); H04B 7/06(2006.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 방향성 Listen-Before-Talk(directional LBT), 전방향 LBT(omnidirectional LBT), 종류(type), 하향링크 제어 정보(Downlink Control Information, DCI), 공간 관계 정보(Spatial Relation Information), 연관 (association), 선택(selection), CCA(Clear Channel Assessment)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020-032706 A1 (LG ELECTRONICS INC.) 13 February 2020 (2020-02-13)<br>See paragraphs [0139], [0147]-[0148] and [0160]. | 1-14 |
| A | WO 2018-167566 A1 (ALCATEL LUCENT) 20 September 2018 (2018-09-20)<br>See page 10, line 27 - page 13, line 32. | 1-14 |
| A | KR 10-2020-0076746 A (SAMSUNG ELECTRONICS CO., LTD.) 29 June 2020 (2020-06-29)<br>See paragraphs [0113]-[0134]. | 1-14 |
| A | LAGEN, Sandra et al. LBT Switching Procedures for New Radio-Based Access to Unlicensed Spectrum. 2018 IEEE Globecom Workshops (GCWkshps). 21 February 2019.<br>See sections III-IV. | 1-14 |
| A | LAGEN, Sandra et al. Paired Listen before Talk for Multi-RAT Coexistence in Unlicensed mmWave Band. 2018 IEEE International Conference on Communications Workshops (ICC Workshops). 05 July 2018.<br>See sections I-III. | 1-14 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 January 2022** | **19 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/013585**

| Patent document cited in search report | | | Publication date (day/month/year) | Patent family member(s) | | | Publication date (day/month/year) |
|---|---|---|---|---|---|---|---|
| WO | 2020-032706 | A1 | 13 February 2020 | CN | 112703810 | A | 23 April 2021 |
| | | | | DE | 112019003558 | T5 | 29 April 2021 |
| | | | | US | 2021-0345406 | A1 | 04 November 2021 |
| WO | 2018-167566 | A1 | 20 September 2018 | None | | | |
| KR | 10-2020-0076746 | A | 29 June 2020 | CN | 111316739 | A | 19 June 2020 |
| | | | | EP | 3669604 | A1 | 24 June 2020 |
| | | | | US | 10764896 | B2 | 01 September 2020 |
| | | | | US | 2019-0141693 | A1 | 09 May 2019 |
| | | | | WO | 2019-093764 | A1 | 16 May 2019 |

Form PCT/ISA/210 (patent family annex) (July 2019)